(19) Europäisches Patentamt / European Patent Office / Office européen des brevets

(11) **EP 3 322 839 B1**

(12) **FASCICULE DE BREVET EUROPEEN**

(45) Date de publication et mention de la délivrance du brevet:
**28.04.2021 Bulletin 2021/17**

(21) Numéro de dépôt: **16736471.0**

(22) Date de dépôt: **08.07.2016**

(51) Int Cl.:
$C25B\ 1/08$ (2006.01)   $C25B\ 1/00$ (2021.01)
$C25B\ 9/20$ (2006.01)   $C25B\ 15/02$ (2021.01)
$H01M\ 8/2425$ (2016.01)   $H01M\ 8/0247$ (2016.01)
$H01M\ 8/04014$ (2016.01)   $H01M\ 8/04701$ (2016.01)

(86) Numéro de dépôt international:
**PCT/EP2016/066304**

(87) Numéro de publication internationale:
**WO 2017/009238 (19.01.2017 Gazette 2017/03)**

(54) **PROCEDES D' (DE CO) ELECTROLYSE DE L'EAU OU DE PRODUCTION D'ELECTRICITE A HAUTE TEMPERATURE A ECHANGEURS INTEGRES EN TANT QU'ETAGES D'UN EMPILEMENT DE REACTEUR OU D'UNE PILE A COMBUSTIBLE**

VERFAHREN ZUR (CO)ELEKTROLYSE VON WASSER ODER ZUR STROMERZEUGUNG BEI HOHER TEMPERATUR MIT AUSTAUSCHERN ALS STUFEN EINES REAKTORSTAPELS ODER EINER BRENNSTOFFZELLE

METHODS FOR (CO)ELECTROLYSIS OF WATER OR FOR PRODUCING ELECTRICITY AT A HIGH TEMPERATURE WITH EXCHANGERS INCORPORATED AS STAGES OF A REACTOR STACK OR A FUEL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2015 FR 1556727**

(43) Date de publication de la demande:
**23.05.2018 Bulletin 2018/21**

(73) Titulaire: **Commissariat à l'Énergie Atomique et aux Énergies Alternatives
75015 Paris (FR)**

(72) Inventeurs:
• **REYTIER, Magali**
  **38250 Villard de Lans (FR)**
• **SZYNAL, Philippe**
  **73800 Chignin (FR)**

(74) Mandataire: **Nony
11 rue Saint-Georges
75009 Paris (FR)**

(56) Documents cités:
WO-A1-2011/083691   WO-A1-2014/097101
WO-A1-2014/156314   WO-A2-2009/040335
US-A- 4 336 122   US-A1- 2005 064 270

## Description

<u>Domaine technique</u>

La présente invention concerne le domaine des piles à combustibles à oxydes solides (SOFC, acronyme anglais pour « *Solid Oxide Fuel Cell* ») et celui de l'électrolyse de l'eau à haute température (EHT, ou EVHT pour électrolyse de la vapeur d'eau à haute température, ou HTE acronyme anglais pour « *High Temperature Electrolysis* », ou encore HTSE acronyme anglais pour « *High Temperature Steam Electrolysis* ») également à oxydes solides (SOEC, acronyme anglais pour « *Solid Oxide Electrolysis Cell* »).

L'invention a trait plus particulièrement à de nouveaux procédés de fonctionnement d'un réacteur d'électrolyse de l'eau à haute température (EHT) de type SOEC pour produire de l'hydrogène $H_2$ à partir de vapeur d'eau $H_2O$ ou de co-électrolyse du dioxyde de carbone $CO_2$ et de l'eau $H_2O$ pour produire du gaz de synthèse (mélange de CO et $H_2$), ou d'une pile à combustible de type SOFC, à empilement de cellules électrochimiques élémentaires.

Bien que décrite en référence principalement à l'application d'électrolyse de l'eau à haute température, l'invention s'applique tout aussi bien à la co-électrolyse du dioxyde de carbone $CO_2$ et de l'eau $H_2O$, ou à une pile à combustible SOFC alimentée en $H_2$ ou en méthane $CH_4$, en tant que combustible et en air ou oxygène $O_2$ en tant que comburant.

<u>Art antérieur</u>

L'électrolyse de l'eau une réaction électrolytique qui décompose l'eau en dioxygène et dihydrogène gazeux avec l'aide d'un courant électrique selon la réaction:

$$H_2O \rightarrow H_2 + \frac{1}{2} O_2.$$

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Pour mettre en œuvre l'électrolyse à haute température, il est connu d'utiliser un électrolyseur de type SOEC (acronyme anglais de « *Solid Oxyde Electrolyte Cell* »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extraits dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau $H_2O$ dans le compartiment cathodique. Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène H2 et des ions oxygène. Le dihydrogène est collecté et évacué en sortie de compartiment à vapeur d'eau/hydrogène. Les ions oxygène $O^{2-}$ migrent à travers l'électrolyte et se recombinent en dioxygène à l'interface entre l'électrolyte et l'électrode à oxygène (anode).

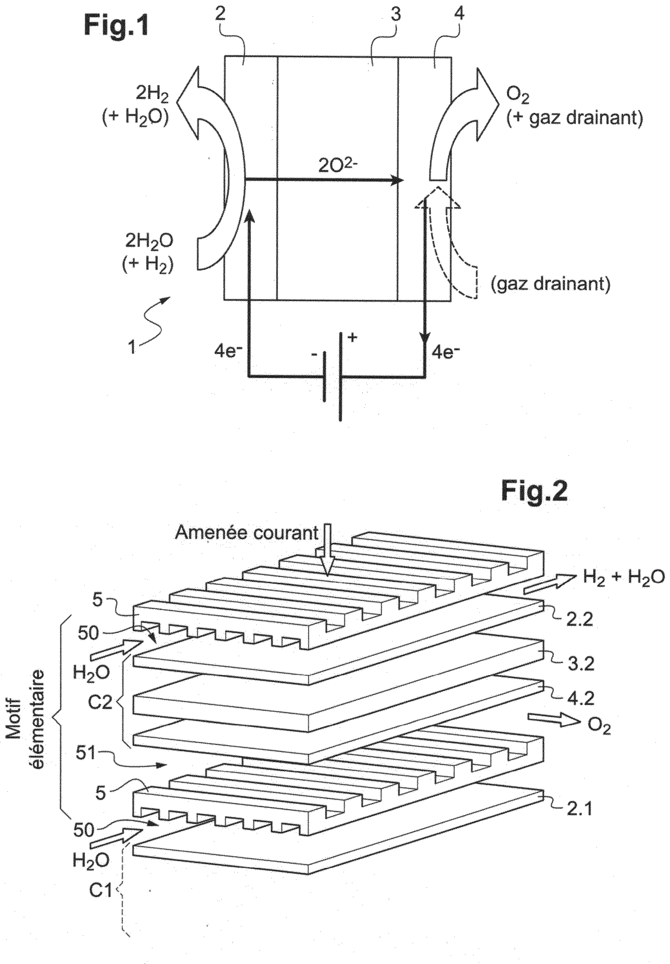

Comme schématisée en figure 1, chaque cellule d'électrolyse élémentaire 1 est formée d'une cathode 2 et d'une anode 4, placées de part et d'autre d'un électrolyte solide 3. Les deux électrodes (cathode et anode) 2,4 sont des conducteurs électroniques, en matériau poreux, et l'électrolyte 3 est étanche au gaz, isolant électronique et conducteur ionique. L'électrolyte peut être en particulier un conducteur anionique, plus précisément un conducteur anionique des ions $O^{2-}$ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

$$2\ H_2O + 4\ e^- \rightarrow 2\ H_2 + 2\ O^{2-}.$$

A l'anode 4, la demi-réaction est la suivante:

$$2\ O^{2-} \rightarrow O_2 + 4\ e^-.$$

L'électrolyte 3 intercalé entre les deux électrodes 2, 4 est le lieu de migration des ions $O^{2-}$, sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène $H_2$ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un réacteur d'électrolyse ou électrolyseur de l'eau à haute température (EHT) comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont des conducteurs électroniques, sont en contact électrique avec une ou des électrodes assurent en général les fonctions d'amenée et de collecte de courant électrique et délimitent un ou des compartiments de circulation des gaz. Plus précisément, un interconnecteur assure le contact électrique par l'une de ses faces avec la cathode d'une cellule et par l'autre de ses faces avec l'anode de la cellule adjacente.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de modules élémentaires constituant les étages électrochimiques d'un électrolyseur de vapeur d'eau à haute température selon l'état de l'art. Cet électrolyseur EHT comporte une pluralité de cellules d'électrolyse élémentaires Cl, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules d'électrolyse est alimenté en série par le courant électrique et en parallèle par les gaz.

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau..

L'interconnecteur 5 assure le passage du courant entre les cellules C1 et C2 par contact direct avec les électrodes adjacentes, c'est-à-dire entre l'anode 4.2 et la cathode 2.1.

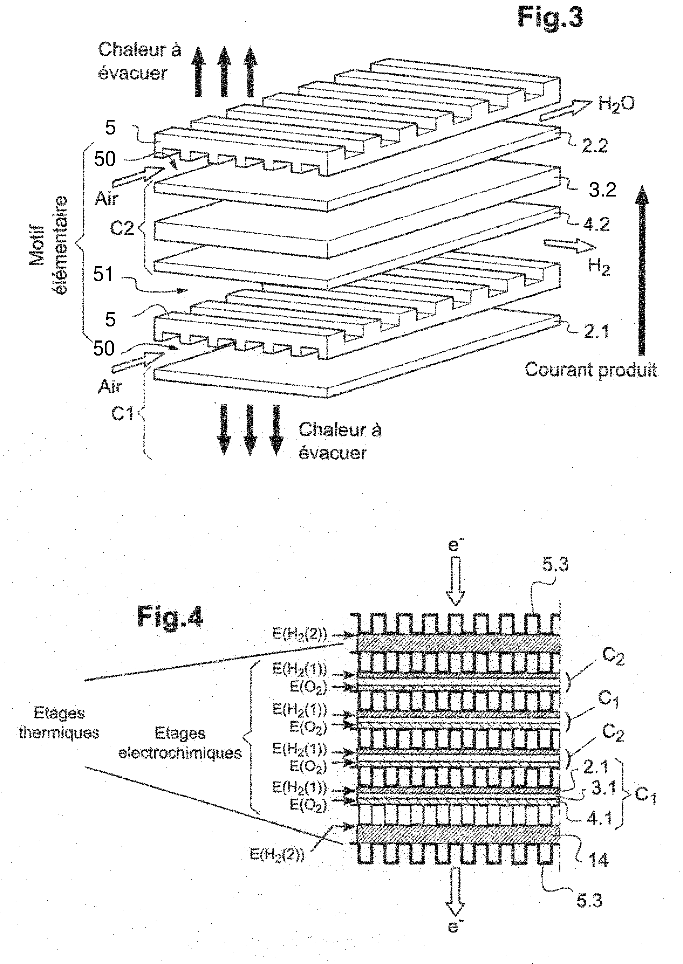

La figure 3 représente une vue éclatée de modules élémentaires constituant les étages électrochimiques d'une pile à combustible SOFC selon l'état de l'art : les mêmes motifs élémentaires que ceux de la figure 2 sont mis en oeuvre pour une pile à combustible SOFC avec des cellules de piles élémentaires C1, C2 et les interconnecteurs 5. Les cathodes 2.1, 2.2...de l'électrolyseur EHT sont alors utilisées en tant qu'anodes en pile SOFC et les anodes 4.1, 4.2... de l'électrolyseur EHT sont quant à elles utilisées en cathodes en piles SOFC. Ainsi, en fonctionnement en pile SOFC, l'injection de l'air contenant l'oxygène dans chaque motif élémentaire se fait dans le compartiment cathodique SOFC 51. Le collectage de l'eau produit à l'anode SOFC est effectué dans le compartiment anodique SOFC 50 en aval de la cellule C1, C2, après recombinaison de l'eau par celle-ci avec l'hydrogène H2 injecté à l'anode 2.2 dans chaque compartiment anodique en amont de la cellule C1, C2. Le courant produit lors de l'oxydation de l'hydrogène en vapeur d'eau est collecté par les interconnecteurs 5.

Ainsi, dans une pile à combustible à oxydes solides SOFC, les cellules C1, C2... et interconnecteurs 5 utilisés sont les mêmes composants, mais le fonctionnement est inverse de celui d'un électrolyseur EHT tel qu'il vient d'être expliqué avec un sens du courant inversé, avec de l'air qui alimente les compartiments cathodiques SOFC et de l'hydrogène en tant que combustible qui alimente les compartiments anodiques SOFC.

Un fonctionnement satisfaisant d'un électrolyseur EHT ou d'une pile à combustible SOFC nécessite entre autres les fonctions essentielles suivantes:

A/ une bonne isolation électrique entre deux interconnecteurs adjacents dans l'empilement, sous peine de court-circuiter la cellule électrochimique élémentaire intercalée entre les deux interconnecteurs,

B/ une bonne étanchéité entre les deux compartiments distincts, i.e. anodique et cathodique, sous peine de recombinaison des gaz produits entraînant une baisse de rendement et surtout l'apparition de points chauds endommageant l'électrolyseur,

C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules.

De plus, le point de fonctionnement retenu pour le réacteur d'électrolyse ou la pile SOFC fixe aussi les conditions thermiques dans l'empilement. En effet, pour les électrolyses réalisées à haute température, l'énergie $\Delta H$ nécessaire à la dissociation de la molécule d'entrée ($H2O$ ou $CO2$) peut être apportée sous forme électrique et/ou de chaleur. L'énergie thermique apportée Q se définit alors en fonction de la tension U aux bornes de chaque cellule d'électrolyse par la relation :

$$Q = \frac{I}{2F}\Delta H - U \cdot I \, ,$$

dans laquelle U est la tension électrique, I est le courant électrique et F est la constante de Faraday.

Ainsi, on définit trois régimes de fonctionnement pour l'électrolyse ou la co-électrolyse, correspondant à trois modes thermiques différents pour l'empilement de cellules:

- le mode dit autothermique dans lequel la tension imposée $U_{imp}$ est égale à $\Delta H/2F$. La chaleur consommée par la réaction de dissociation est complètement compensée par les différentes résistances électriques de l'électrolyseur (irréversibilités). L'électrolyseur n'a pas besoin de gestion thermique particulière tout en restant stable en température.
- le mode dit endothermique dans lequel la tension imposée $U_{imp}$ est inférieure à $\Delta H/2F$. L'électrolyseur consomme plus de chaleur que les pertes électriques en son sein. Cette chaleur nécessaire doit alors lui être apportée par un autre moyen, sous peine de voir sa température chuter irrémédiablement.
- le mode dit exothermique dans lequel la tension imposée Uimp est supérieure à $\Delta H / 2F$. L'électrolyse consomme alors moins de chaleur que les pertes électriques par effet Joule. Ce dégagement de chaleur au sein de l'électrolyseur doit alors être évacué par un autre moyen, sous peine de voir sa température augmenter de manière rédhibitoire.

Le fonctionnement d'une pile alimentée en méthane $CH_4$ nécessite quant à lui des précautions. En effet, la réaction de reformage interne, selon l'équation $CH_4+H_2O \rightarrow 3H_2+CO$, catalysée par le cermet, en général en Nickel-zircone de l'anode SOFC alimentée en $CH_4$, est fortement endothermique, alors que la réaction d'oxydation de l'hydrogène au sein de la pile est fortement exothermique. Sans précaution particulière, cela nécessite de gérer de forts gradients thermiques dans l'empilement, entre l'entrée et la sortie des gaz, ces gradients thermiques importants pouvant être rédhibitoires car induisant de fortes contraintes mécaniques.

Ainsi, les réactions électrochimiques nécessaires au fonctionnement de ce type d'empilement en électrolyseur ou pile à combustible SOFC peuvent être réalisées dans diverses conditions électriques et thermiques, chacune ayant ses propres avantages et ses inconvénients.

En particulier, en mode endothermique pour l'électrolyse, on consomme moins d'électricité mais on produit moins d'hydrogène et il faut fournir de la chaleur à l'empilement. L'intérêt de ce point de fonctionnement réside dans la disponibilité d'une source de chaleur peu coûteuse. Tout dépend alors de la nature, de la température de cette source thermique et du design de l'interconnecteur permettant de valoriser cette chaleur au mieux.

A contrario, le mode exothermique pour l'électrolyse comme pour la pile conduit à une production importante soit d'hydrogène soit d'électricité, mais il faut refroidir l'empilement, ce qui peut être difficile à réaliser. Seul un design adapté d'interconnecteur peut permettre le refroidissement. L'intérêt de ce mode exothermique dépend alors beaucoup du coût de l'électricité et de l'utilisation de la chaleur excédentaire.

Une contrainte importante est de gérer au mieux ces régimes de fonctionnement thermiques d'une pile à combustible (SOFC) ou d'un électrolyseur (EHT). En effet, quel que soit le mode considéré, les gradients thermiques au sein de l'empilement peuvent être très importants, ce qui génère des contraintes mécaniques élevées voire très élevées pouvant conduire jusqu'à la casse des cellules et/ou des joints. De plus, si on refroidit mal l'empilement, on peut atteindre des températures trop élevées notamment pour les joints d'étanchéité.

Or, les éléments internes à la pile SOFC ou à l'électrolyseur, notamment les cellules élémentaires, sont réalisés au moins en partie en céramique, ceux-ci sont donc très sensibles aux gradients de température et ne sont pas aptes à supporter ni un choc thermique, ni un gradient thermique trop important (quelques dizaines de degrés entre l'entrée et la sortie des gaz).

Par ailleurs, pour assurer la longévité de la pile ou de l'électrolyseur et son bon fonctionnement, il est préférable d'assurer une répartition de la température au sein du réacteur, la plus homogène possible. On recherche typiquement des températures ne variant pas plus de 10 à 20°C dans tout l'empilement.

Différentes stratégies de régulation/gestion thermique d'un empilement d'électrolyseur EHT ou de pile SOFC ont déjà été mises en œuvre.

Au préalable, il est important de préciser que les hautes températures de fonctionnement d'électrolyseur EHT ou de pile SOFC interdisent tout refroidissement au moyen d'un liquide comme c'est le cas pour des électrolyseurs et des piles à combustibles à membrane échangeuse de protons en tant qu'électrolyte (acronyme anglais PEM pour « *Protons Exchange Membrane* » ou pour « *Polymer Electrolyte Membrane* »).

Des solutions largement répandues pour le refroidissement des piles SOFC, consistent de manière alternative à :

- effectuer un reformage interne direct au sein de la pile, c'est-à-dire une conversion possible grâce à l'activité catalytique de l'anode, d'un mélange de méthane et d'eau suivant l'équation $CH_4 + H_2O \rightarrow 3H_2 + CO$,
- baisser le taux d'utilisation en carburant,
- augmenter le débit d'air.

Les deux dernières solutions citées visent à évacuer la chaleur par les gaz, mais cela a un impact négatif direct sur le rendement de la pile.

Il est également connu de la demande de brevet WO 2009/040335 de faire circuler les gaz au sein même des plaques d'interconnexion qui jouent alors le rôle d'échangeur, cette solution ayant l'avantage de pouvoir être mise en œuvre à la fois pour un fonctionnement en pile SOFC et pour un électrolyseur.

Certains designs d'empilement prévoient de rajouter des tubes entre les plaques d'interconnexion de manière à faire circuler un gaz en vue d'évacuer les calories: on peut citer ici la demande de brevet WO2005/122302.

D'autres designs, comme décrit dans la demande de brevet US 2006/0105213, présentent des interconnecteurs avec ailettes dépassant vers l'extérieur de l'empilement afin d'assurer un échange thermique supplémentaire avec l'environnement extérieur.

Enfin, la faible épaisseur des tôles d'interconnexion limite les possibilités de refroidissement par rayonnement et conduit donc à épaissir certaines tôles, comme cela est par exemple décrit dans la demande de brevet WO2013/060869.

Cela permet d'augmenter l'échange thermique prépondérant par rayonnement et/ou de pouvoir faire circuler d'autres fluides au sein de ce type de plaque épaisse, comme décrit dans le brevet US 4574112, mais a un impact négatif important sur le coût de l'empilement tout comme pour les tubes entre plaques ou les ailettes d'échange rapportées.

Par ailleurs, un empilement de motifs élémentaires dans un électrolyseur EHT ou dans une pile SOFC présente aussi des conditions limites différentes d'un motif à l'autre adjacent. En particulier, les motifs élémentaires proches des extrémités de l'empilement peuvent échanger convenablement la chaleur avec l'environnement extérieur, ce qui permet de pouvoir gérer leur température dans une certaine mesure.

Par contre, les motifs élémentaires au centre de l'empilement n'ont pas d'échange thermique possible avec l'environnement extérieur. Pour ces motifs au centre de l'empilement, seuls les gaz apportés dans ces zones peuvent donc permettre de gérer la thermique.

La demande US 2005/064270 divulgue une pile de type à membrane polymère PEMFC à empilement avec des interconnecteurs à deux tôles ondulées à ondulations d'amplitude différentes de sorte à délimiter entre elles des conduits de circulation interne de fluide de refroidissement de l'empilement.

La demande WO2011/083691 concerne un électrolyseur SOEC à géométrie de blocs parallélépipédiques rectangulaires jointifs par des éléments chauffants, chaque bloc logeant une cellule d'électrolyse de également de forme parallélépipédique rectangulaire homothétique constitué d'une cathode, entourée d'une membrane d'électrolyte, elle-même entourée d'une anode, ces composants étant déposés par technique ALD (Atomic Layer Déposition), chaque bloc étant isolé électriquement de ceux adjacents au moyen d'une couche isolante également déposée par ALD ou par CVD.

Le brevet US4336122 décrit un électrolyseur avec des électrodes sous la forme de plaques métalliques superposées en étant séparées par des entretoises annulaires en définissant ainsi des espaces, les électrodes étant connectées en série. L'électrolyte liquide circule dans les espaces et traverse l'empilement, certains espaces étant conformés en chicanes pour faire circuler l'électrolyte sur toute la surface des électrodes délimitant ces espaces afin de refroidir l'empilement

La demande WO2014/097101 se rapporte à la co-électrolyse simultanée mais séparée de la vapeur d'eau et de CO2. Les interconnecteurs décrits comportent trois tôles planes stratifiées et assemblées entre elles, formant des étages électrochimiques.

La demande EP 2980904 propose d'introduire le combustible et l'air au centre d'un empilement. Dans un mode de réalisation, l'alimentation en air et en combustible se fait au niveau d'un étage échangeur de chaleur agencé au centre de l'empilement. En sortie de l'étage, le gaz circule dans une première partie de cellules électrochimiques et passe ensuite dans une deuxième partie des cellules électrochimiques. En sortie de l'étage, de l'air est alimenté simultanément au niveau des cathodes des cellules électrochimiques.

Il existe donc un besoin d'améliorer les réacteurs d'électrolyse ou de co-électrolyse et les piles à combustible SOFC fonctionnant à haute température, notamment afin de limiter les gradients thermiques au sein de leur empilement en vue d'augmenter leur durée de vie, tout en réduisant le coût de réalisation de l'empilement, en particulier en s'affranchissant de tout ajout de matière ou de pièces supplémentaires, telles que des plaques d'interconnexion épaisses et/ou de tubes et/ou d'ailettes rapportés.

Un but de l'invention est de répondre au moins en partie à ce besoin.

Exposé de l'invention

Pour ce faire, l'invention concerne, sous une première alternative, un Réacteur d'électrolyse à haute température selon la revendication 1.

L'invention concerne également, sous une deuxième alternative une pile à combustible à haute température (SOFC) selon la revendication 2.

De préférence, l'élément de contact électrique laissant passer les gaz est une grille métallique. L'élément peut être aussi un ensemble de fils métalliques discrets ou un substrat poreux conducteur électronique.

Selon un mode de réalisation avantageux, les interconnecteurs des étages électrochimiques consistent chacun en un dispositif constitué de trois tôles planes, allongées selon deux axes de symétrie orthogonaux entre eux, l'une des tôles d'extrémité étant destinée à venir en contact mécanique avec le plan d'une cathode d'une cellule élémentaire et l'autre des tôles d'extrémité étant destinée à venir en contact mécanique avec le plan d'une anode d'une cellule élémentaire adjacente, dispositif dans lequel :

- les parties de la tôle centrale et d'une des tôles d'extrémité, dite première tôle d'extrémité sont non percées tandis que la partie centrale de l'autre tôle d'extrémité, dite deuxième tôle d'extrémité est percée,
- chacune des trois tôles planes est percée, à la périphérie de sa partie centrale, de six lumières, les premières à quatrième lumières de chaque tôle étant allongées sur une longueur correspondant à une partie de la longueur de la partie centrale selon l'un des axes X des tôles et étant réparties deux à deux de part et d'autre dudit axe X, tandis que les cinquièmes et sixièmes lumières sont allongées sur une longueur correspondant sensiblement à la longueur de la partie centrale selon l'autre des axes Y,
- la première tôle d'extrémité, comporte en outre une septième et une huitième lumières agencées symétriquement de part et d'autre de l'axe X, à l'intérieur de ses premières à quatrième lumières, et allongées sur une longueur correspondant sensiblement à la longueur de la partie centrale selon l'axe X,
- la deuxième des tôles d'extrémité, comporte en outre une septième et une huitième lumières agencées symétriquement de part et d'autre de l'axe Y à l'intérieur respectivement de sa cinquième et de sa sixième lumière, et allongées sur une longueur correspondant sensiblement la longueur de la partie centrale selon ledit axe Y, et,
- les première, troisième, cinquième et sixième lumières de la tôle centrale sont élargies par rapport respectivement aux première, troisième, cinquième et sixième lumières de chaque tôle d'extrémité, tandis que les deuxième et quatrième lumière des trois tôles sont de dimensions sensiblement identiques entre elles,
- toutes les lumières élargies de la tôle centrale comportent dans leur partie élargie, des languettes de tôles espacées les unes des autres en formant un peigne, chacune des fentes définie entre le bord d'une fente élargie et une languette ou entre deux languettes consécutives débouchant sur une des lumières intérieures de la première ou deuxième tôle d'extrémité,
- les trois tôles sont stratifiées et assemblées entre elles telles que:

  • les languettes de tôles forment des entretoises d'espacement entre première et deuxième tôles d'extrémité respectivement entre les première et septième lumières de la première tôle d'extrémité, entre les troisième et huitième lumières de la première tôle d'extrémité, entre les cinquième et septième lumières de la deuxième tôle d'extrémité, et entre les sixième et huitième lumières de la deuxième tôle d'extrémité,
  • chacune des première à sixième lumières de l'une des trois tôles est en communication fluidique individuellement respectivement avec l'une des première à sixième lumières correspondantes des deux autres tôles,
  • la première ou alternativement la deuxième lumière de la première tôle d'extrémité est en communication fluidique avec la septième lumière de la première tôle d'extrémité par le biais des fentes la première lumière élargie de la tôle centrale,

- la troisième ou alternativement la quatrième lumière de la première tôle d'extrémité est en communication fluidique avec la huitième lumière de la première tôle d'extrémité par le biais des fentes de la troisième lumière élargie de la tôle centrale,
- la cinquième et la septième lumières de la deuxième tôle d'extrémité sont en communication fluidique par le biais des fentes de la cinquième lumière élargie de la tôle centrale,
- la sixième et la huitième lumières de la deuxième tôle d'extrémité sont en communication fluidique par le biais des fentes de la sixième lumière élargie de la tôle centrale.

Selon ce mode, au moins un des deux interconnecteurs des étages de régulation thermique est constitué du même dispositif que les interconnecteurs des étages électrochimiques, mais ne comporte pas les septièmes et huitièmes lumières de la deuxième tôle d'extrémité.

Avantageusement, les deux interconnecteurs d'un même étage électrochimique sont constitués chacun à partir de trois tôles planes identiques mais avec la tôle centrale de l'un des interconnecteurs retournée dessus/dessous par rapport à la tôle centrale de l'autre des interconnecteurs.

Selon une variante avantageuse, on peut prévoir un nombre d'étages de régulation thermique différent du nombre d'étages électrochimiques.

On peut aussi prévoir un nombre d'étages de régulation thermique supérieur au centre de l'empilement que sur les extrémités de l'empilement.

Selon une caractéristique avantageuse, aucun étage de régulation thermique n'est visible depuis l'extérieur de l'empilement.

Ainsi, l'invention consiste essentiellement à créer un circuit d'un gaz caloporteur dédié à la régulation/gestion thermique de l'empilement d'un réacteur EHT ou d'une pile à combustible SOFC en supprimant certaines cellules à certaines zones de l'empilement pour les remplacer par des éléments de contact électrique qui peuvent laisser passer le gaz caloporteur.

Autrement dit, on crée un nouveau type d'empilement dans un réacteur EHT ou une pile à combustible SOFC dans lequel on conserve la plupart des étages électrochimiques usuels dédiés soit à l'(la) (co-) électrolyse de la vapeur d'eau soit à la production d'électricité par la pile, et on leur adjoint des étages à fonction de régulation thermique en lieu et place d'étages électrochimiques afin de réguler la thermique des réactions dans ces zones.

Comparativement aux solutions de régulation thermique selon l'état de l'art, l'invention permet de ne pas à avoir à réaliser des interconnecteurs spécifiques avec des rajouts de tubes ou avec des surépaisseurs de plaques ou encore avec des ailettes de refroidissement en contact avec l'extérieur.

En particulier, dans le mode de réalisation avantageux d'interconnecteurs à trois tôles planes stratifiées et assemblées entre elles, il suffit :

- dans les interconnecteurs dédiés aux étages électrochimiques de retourner dessus/dessous la tôle centrale d'un interconnecteur par rapport à celle d'un interconnecteur adjacent ;
- dans les interconnecteurs dédiés aux étages de régulation thermique, de supprimer les lumières d'alimentation et de récupération soit en gaz drainant, soit en comburant. On obtient ainsi à moindre coût un empilement dont tous les interconnecteurs sont réalisés avec le même design de trois tôles planes

Ainsi, il est possible de réaliser tous les interconnecteurs, qu'ils soient dédiés aux étages électrochimiques ou à ceux de régulation thermique, sur le même outil de production et avec les mêmes gammes de fabrication. Autrement dit, les étages de régulation thermique selon l'invention sont réalisés avec le même outil de fabrication, d'assemblage et de montage que dans un empilement n'intégrant pas ces étages.

Avantageusement, le gaz caloporteur peut être soit le combustible, telle que la vapeur d'eau en mode de fonctionnement d' (de co-) électrolyse, soit le gaz drainant ou le comburant en mode de fonctionnement de pile SOFC. Pour les deux modes de fonctionnement, SOFC ou SOEC, on prévoit de fait de choisir un matériau poreux du contact électrique qui tienne compte de la nature oxydante ou réductrice de l'atmosphère du gaz caloporteur.

On peut alors réaliser une alimentation/récupération du gaz caloporteur à la fois pour un groupe d'étages électrochimiques et pour un groupe d'étages de régulation thermique adjacents aux étages électrochimiques, soit en parallèle en maintenant les clarinettes séparées l'une de l'autre, soit en série en les reliant l'une à l'autre à l'extérieur de l'empilement.

L'invention ne modifie pas la réversibilité d'un réacteur à empilement qui peut être utilisé aussi bien en tant que réacteur d'électrolyse ou co- électrolyse qu'en tant que pile SOFC avec comme combustible de l'hydrogène, ou du méthane.

En résumé, les réacteurs EHT, piles à combustible SOFC et leurs procédés de fonctionnement selon l'invention présentent de nombreuses caractéristiques et avantages, parmi lesquels on peut citer:

- régulation/gestion de la thermique d'un empilement puisque pouvant être ciblée dans les zones de réaction quasi adiabatiques au centre de l'empilement,
- couplage en série du gaz caloporteur avec le gaz d'alimentation $H_2/H_2O$ des cellules pour préchauffer ou refroidir les étages électrochimiques,
- modifications du design au niveau des étages de régulation thermique à moindre coût puisque ces modifications consistent en le remplacement de cellules à oxydes solides par des éléments de contacts électrique, tels que des grilles métalliques, et en ce qui concerne les interconnecteurs dédiés uniquement au non perçage de lumières d'alimentation et de récupération de gaz comburant et donc par-là l'absence de contraintes de réalisation d'interconnecteurs à plaques épaisses, ou avec tubes de circulation de gaz caloporteur spécifiques,
- réalisations de l'ensemble des interconnecteurs moins coûteuses comparativement à celles des solutions selon l'état de l'art, car les moyens de fabrication, la gamme de fabrication et de montage sont identiques pour tous les interconnecteurs à tôles planes stratifiées et assemblées.

L'invention a également pour objet un procédé d'électrolyse à haute température de la vapeur d'eau $H_2O$, ou de co-électrolyse de la vapeur d'eau $H_2O$ et du dioxyde de carbone $CO_2$, mis en œuvre dans un réacteur selon une décrit précédemment selon lequel:

- on alimente, depuis les interconnecteurs des étages électrochimiques, la vapeur d'eau ($EH_2(1)$) ou un mélange de vapeur d'eau $H_2O$ et de dioxyde de carbone $CO_2$, en tant que combustible, et on la (le) distribue aux cathodes des cellules, puis on récupère l'hydrogène $H_2$ produit ($SH_2(1)$) ou le gaz de synthèse (mélange de monoxyde de carbone $CO$ et d'hydrogène $H_2$) en sortie des cathodes,
- on alimente, depuis les interconnecteurs des étages électrochimiques, un gaz drainant, tel que de l'air, (E(02)), et on le distribue aux anodes des cellules, puis on récupère l'oxygène $O_2$ produit et le gaz drainant (S(02)) en sortie des anodes,
- on alimente, depuis les interconnecteurs des étages de régulation thermique, un gaz caloporteur ($EH_2(2)$) et on le distribue aux éléments de contact électrique, puis on le récupère en sortie des éléments.

Selon une variante avantageuse, le gaz caloporteur ($EH_2(2)$) est le combustible (vapeur d'eau $H_2O$, ou mélange de vapeur d'eau $H_2O$ et d'hydrogène $H_2$, ou mélange de vapeur d'eau $H_2O$ et de dioxyde de carbone $CO_2$) ou le gaz drainant, tel que de l'air, (E(02)).

L'invention a encore pour objet un procédé de production d'électricité à haute température, mis en œuvre dans une pile à combustible à oxydes solides (SOFC) décrite précédemment, selon lequel :

- on alimente depuis les interconnecteurs des étages électrochimiques, le combustible ($EH_2(1)$), et on le distribue aux anodes des cellules, puis on récupère le surplus de combustible et l'eau produite ($SH_2(1)$) en sortie des anodes,
- on alimente depuis les interconnecteurs des étages électrochimiques le comburant, tel que de l'air, (E(O2)), et on le distribue aux cathodes des cellules, puis on récupère le surplus de comburant S(O2)) en sortie des cathodes,
- on alimente depuis les interconnecteurs des étages de régulation thermique, un gaz caloporteur ($EH_2(2)$) et on le distribue aux éléments de contact électrique, puis on le récupère en sortie des éléments.

Le combustible est de préférence l'hydrogène ou le méthane ($CH_4$).

Avantageusement, l'alimentation du gaz combustible est reliée en série à celle du gaz caloporteur.

Selon une variante, l'alimentation du gaz combustible peut être en parallèle (« coflow » en anglais) de celle du gaz caloporteur.

De manière alternative, l'alimentation du gaz combustible est à contre-courant (« counterflow » en anglais) de celle du gaz caloporteur.

Avantageusement, on peut mettre en œuvre une réaction chimique exothermique ou endothermique entre le gaz caloporteur et les éléments de contact électrique.

Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène ou à monoxyde de carbone (cathode) plus épaisse qui sert donc de support.

Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :

- la figure 1 est une vue schématique montrant le principe de fonctionnement d'un électrolyseur d'eau à haute température;
- la figure 2 est une vue schématique en éclaté d'une partie d'un électrolyseur de vapeur d'eau à haute température comprenant des interconnecteurs selon l'état de l'art,
- la figure 3 est une vue schématique en éclaté d'une partie d'une pile à combustible SOFC à haute température comprenant des interconnecteurs selon l'état de l'art,
- la figure 4 en coupe d'un réacteur d'électrolyse mettant en œuvre un procédé d'électrolyse à haute température selon un mode de l'invention,
- la figure 5 est une vue en éclaté d'une partie d'un réacteur d'électrolyse selon l'invention avec un étage d'électrolyse adjacent à un étage de régulation thermique,
- les figures 6A et 6B sont des vues en éclaté d'un interconnecteur d'un étage d'électrolyse selon l'invention qui permet une alimentation/récupération de la vapeur d'eau et de l'hydrogène produit, et une alimentation/récupération du gaz caloporteur les figures montrant l'alimentation, la distribution et la récupération de la vapeur d'eau et de l'hydrogène produit en figure 6A et gaz caloporteur en figure 6B,
- la figure 6C est une vue en éclaté de l'interconnecteur selon les figures 6A et 6B, montrant l'alimentation, la distribution et la récupération du gaz drainant et de l'oxygène produit,
- la figure 7A est une vue de face d'une tôle d'extrémité d'un interconnecteur selon la figure 6A, montrant l'alimentation, la distribution et la récupération de la vapeur d'eau et de l'hydrogène produit,
- la figure 7B est une vue de face d'une tôle d'extrémité d'un interconnecteur selon la figure 6B, montrant l'alimentation, la distribution et la récupération du gaz caloporteur selon l'invention,
- la figure 7C est une vue de face d'une tôle d'extrémité d'un interconnecteur selon la figure 6A ou 6B, montrant l'alimentation, la distribution et la récupération du gaz drainant et de l'oxygène produit,
- la figure 7D est une vue en perspective d'un interconnecteur selon la figure 6A ou 6B,
- la figure 8 est une vue en éclaté d'un interconnecteur d'un étage de régulation thermique selon l'invention, cette figure montrant l'absence de lumière pour l'alimentation, la distribution et récupération du gaz drainant et de l'oxygène au niveau de l'étage de régulation thermique,
- les figures 9A et 9B sont des vues de détail d'une partie d'un interconnecteur selon l'invention.

On précise ici que sur l'ensemble des figures 1 à 8, les symboles et les flèches d'alimentation d'une part de vapeur d'eau $H_2O$, de distribution et de récupération de dihydrogène $H_2$ et d'oxygène $O_2$ et du courant sont montrés à des fins de clarté et de précision, pour illustrer le fonctionnement d'un réacteur d'électrolyse de vapeur d'eau selon l'état de l'art et d'un réacteur d'électrolyse de vapeur d'eau selon l'invention.

On précise également que tous les électrolyseurs décrits sont de type à oxydes solides (SOEC, acronyme anglais de « *Solid Oxyde Electrosis Cell* ») fonctionnant à haute température. Ainsi, tous les constituants (anode/électrolyte/cathode) d'une cellule d'électrolyse sont des céramiques. La haute température de fonctionnement d'un électrolyseur (réacteur d'électrolyse) est typiquement comprise entre 600°C et 950°C.

Typiquement, les caractéristiques d'une cellule d'électrolyse élémentaire SOEC convenant à l'invention, du type cathode support (CSC), peuvent être celles indiquées comme suit dans le tableau ci-dessous.

**TABLEAU**

| Cellule d'électrolyse | Unité | Valeur |
|---|---|---|
| **Cathode 2** | | |
| Matériau constitutif | | Ni-YSZ |
| Epaisseur | $\mu m$ | 315 |
| Conductivité thermique | $W\ m^{-1}\ K^{-1}$ | 13,1 |
| Conductivité électrique | $\Omega^{-1}\ m^{-1}$ | $10^5$ |
| Porosité | | 0,37 |
| Perméabilité | $m^2$ | $10^{-13}$ |
| Tortuosité | | 4 |
| Densité de courant | $A.m^{-2}$ | 5300 |
| **Anode 4** | | |
| Matériau constitutif | | LSM |

(suite)

| Anode 4 | | |
|---|---|---|
| Epaisseur | $\mu$m | 20 |
| Conductivité thermique | W m$^{-1}$ K$^{-1}$ | 9,6 |
| Conductivité électrique | $\Omega^{-1}$ m$^{-1}$ | 1 10$^4$ |
| Porosité | | 0,37 |
| Perméabilité | m$^2$ | 10$^{-13}$ |
| Tortuosité | | 4 |
| Densité de courant | A.m$^{-2}$ | 2000 |
| **Electrolyte 3** | | |
| Matériau constitutif | | YSZ |
| Epaisseur | $\mu$m | 90$\mu$m en électrolyte support et 5 $\mu$m en électrode support |
| Résistivité | $\Omega$ m | 0,42 |

Les figures 1 à 3 ont déjà été décrites en détail en préambule. Elles ne le sont donc pas ci-après.

Par convention, et afin de faciliter la lecture des circulations des gaz sur les différentes figures, on utilise les symboles suivants :

- EH$_2$(1) : désigne la circulation à travers l'empilement de la vapeur d'eau en tant que « combustible » alimentant les cellules d'électrolyse C1, C2 ;
- SH$_2$(1) : désigne la circulation à travers l'empilement de l'hydrogène produit par les cellules d'électrolyse C1, C2 ;
- EH$_2$(2) : désigne la circulation à travers l'empilement du gaz caloporteur alimentant les étages de régulation thermique ;
- SH$_2$(2) : désigne la circulation à travers l'empilement du gaz caloporteur en sortie des étages de régulation thermique ;
- E(O$_2$): désigne la circulation à travers l'empilement du gaz drainant alimentant les cellules d'électrolyse C1, C2 ;
- S(O$_2$) : désigne la circulation à travers l'empilement de l'oxygène produit aux cellules d'électrolyse C1, C2.

Pour améliorer la gestion des fonctionnements thermiques du réacteur d'électrolyse des étages électrochimiques, plus particulièrement ceux du centre de l'empilement qui n'ont pas d'échange possible avec l'environnement extérieur, les inventeurs ont pensé judicieusement à intégrer des étages de régulation thermique au sein de l'empilement en mettant en œuvre des interconnecteurs à tôles planes très peu modifiés dans leur structure par rapport à ceux dédiés aux étages électrochimiques et en agençant des éléments de contact électrique laissant passer les gaz en lieu et place des cellules d'électrolyse.

Ainsi, comme illustré en figure 4, on réalise simultanément les étapes suivantes au sein de l'empilement selon l'invention:

- on alimente, depuis les interconnecteurs 5.1, 5.2 des étages électrochimiques, la vapeur d'eau EH$_2$(1) en tant que combustible, et on la distribue aux cathodes des cellules d'électrolyse C1, C2, puis on récupère l'hydrogène H$_2$ produit SH$_2$(1) en sortie des cathodes 2.1, 2.2,
- on alimente, depuis les interconnecteurs 5.1, 5.2 des étages électrochimiques, un gaz drainant, tel que de l'air, E(O$_2$), et on le distribue aux anodes 4.1, 4.2 des cellules, puis on récupère l'oxygène O$_2$ produit et le gaz drainant S(O$_2$) en sortie des anodes,
- on alimente, depuis les interconnecteurs 5.2, 5.3 des étages de régulation thermique, un gaz caloporteur EH$_2$(2) et on le distribue aux éléments de contact électrique 14, puis on le récupère en sortie de ces éléments 14 SH$_2$(2).

Ainsi, selon l'invention, on conserve la plupart des étages électrochimiques usuels d'un empilement de réacteur EHT, qui sont dédiés à l'électrolyse de la vapeur d'eau, et on leur adjoint des étages à fonction de régulation thermique en lieu et place d'étages électrochimiques afin de réguler la thermique des réactions dans ces zones.

Selon l'invention, on prévoit que le circuit des étages de régulation thermique soit balayé par un gaz caloporteur suffisamment réducteur pour éviter l'oxydation des éléments de contact 14. Ainsi, le caloporteur peut être avantageusement un mélange de vapeur d'eau et d'hydrogène. Dans ce cas, l'hydrogène est présent à au moins 10% afin d'éviter l'oxydation des éléments de contact 14, notamment sous la forme d'une grille en nickel.

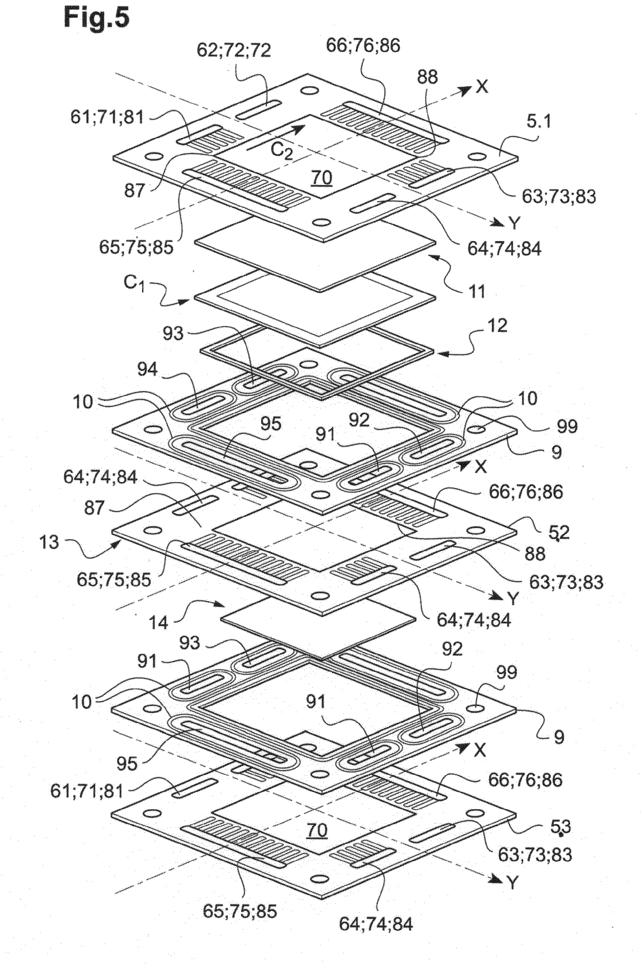

On a représenté de manière schématique en figure 5, une partie d'un électrolyseur haute température à oxydes solides (SOEC) selon l'invention.

Cet électrolyseur réacteur d'électrolyse comporte un empilement alterné d'une cellule d'électrolyse élémentaire de type SOEC (C1) formée d'une cathode 2.1, 2.2, d'une anode 4.1, 4.2 et d'un électrolyte 3.1, 3.2, intercalé entre la cathode et l'anode, et d'une grille métallique 14.

Cette grille métallique assure la continuité électrique en série au travers de l'étage de régulation thermique.

L'étage électrochimique comprend deux interconnecteurs électrique et fluidique 5.1, 5.2 agencés de part et d'autre de la cellule élémentaire C1 avec la cathode en contact électrique avec la face inférieure de l'interconnecteur du dessus 5.1 et l'anode en contact électrique avec la face supérieure de l'interconnecteur du dessous 5.2.

L'étage de régulation thermique comprend également deux interconnecteurs électrique et fluidique 5.2, 5.3 dont celui de dessus 5.2 est commun avec l'étage électrochimique. Les deux interconnecteurs 5.2, 5.3 sont agencés de part et d'autre de la grille métallique 14.

Comme montré en figure 5, on prévoit en outre des cadres d'isolation et d'étanchéité 9 permettant d'assurer l'isolation électrique entre interconnecteurs 5.1 et 5.2 d'une part et entre interconnecteurs 5.2, 5.3 d'autre part. Il est à noter qu'entre les deux interconnecteurs 5.2 et 5.3 le cadre 9 sert avant tout à réaliser l'étanchéité, l'isolation électrique n'étant pas requise sur l'étage dédié à la gestion thermique.

Chaque cadre 9 est percé de lumières 99 adaptées pour loger des tirants de fixation de l'empilement, ainsi que des joints 10 prévus pour réaliser l'étanchéité autour des lumières d'alimentation des gaz $H_2O$, Air et de récupération des gaz produits $H_2$, $O_2$ avec Air, ainsi qu'autour des clarinettes dédiées au gaz caloporteur

Une couche de contact 11, telle qu'une grille métallique en nickel, permet d'assurer le contact entre la cathode de la cellule C1 et l'interconnecteur 5.1 du dessus.

Un autre joint 12 est en outre prévu à la périphérie de l'anode de la cellule pour assurer l'étanchéité de l'oxygène produit.

L'ensemble de l'empilement comprenant la cellule d'électrolyse C1 et la grille métallique 11 de passage du gaz caloporteur est traversé par le même courant électrique.

Dans le réacteur selon l'invention, tous les compartiments cathodiques 50 des étages électrochimiques dans lesquels circulent la vapeur d'eau alimentée $H_2O$ et l'hydrogène produit $H_2$ communiquent entre eux.

De même, tous les étages de régulation thermique dans lesquels circule le gaz caloporteur, communiquent en eux.

Selon l'invention, un interconnecteur 5.3 dédié à un étage de régulation thermique est différent d'un interconnecteur 5.1 dédié à un étage électrochimique afin de pouvoir réaliser uniquement une alimentation en gaz caloporteur, sans introduction de comburant, au niveau d'une grille métallique 14.

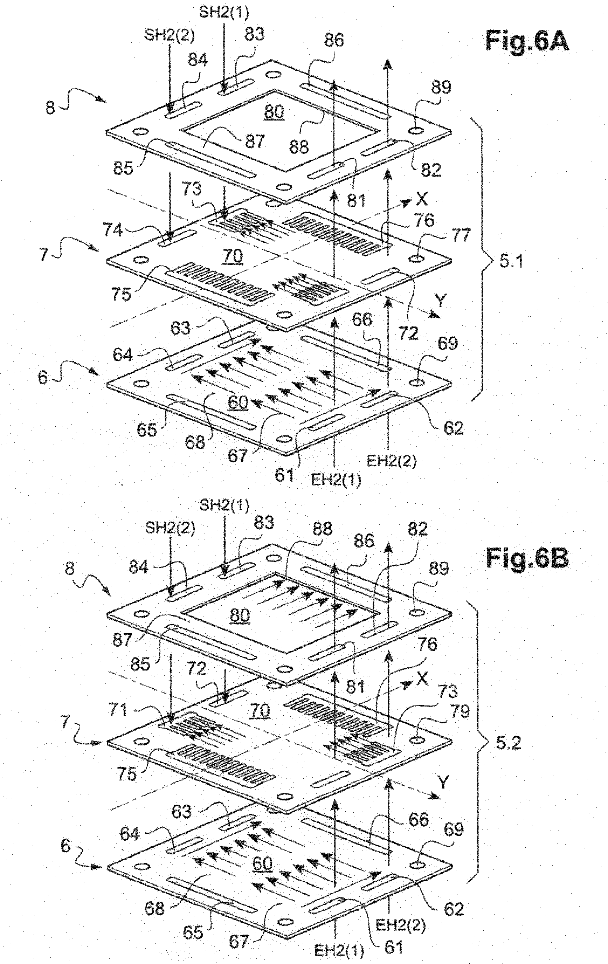

Les figures 6A à 6C montrent chacune en éclaté un interconnecteur 5.1 ou 5.2 d'un étage électrochimique selon l'invention permettant d'assurer à la fois :

- l'alimentation de vapeur d'eau $H_2O$ en tant que « combustible », la circulation de la vapeur d'eau et de l'hydrogène produit à la cellule C1, la récupération de l'hydrogène produit, ainsi que l'alimentation et la récupération de l'oxygène $O_2$ produit au sein de l'empilement d'un réacteur d'électrolyse,
- l'alimentation en gaz caloporteur, la circulation de ce gaz caloporteur au niveau d'une grille métallique 14 ainsi que sa récupération ayant circulé sur une grille métallique 14 au sein de l'empilement d'un réacteur d'électrolyse.

Chaque interconnecteur 5.1, 5.2 dédié à un étage électrochimique permet d'assurer une circulation du gaz ($H_2O/H_2$) aux cathodes des cellules à courant croisé à 90° avec la circulation du gaz récupéré (02) et le gaz drainant à l'anode des cellules.

L'interconnecteur 5.1 ou 5.2 est constitué de trois tôles planes 6, 7, 8 allongées selon deux axes de symétrie (X, Y) orthogonaux entre eux, les tôles planes étant stratifiées et assemblées entre elles par soudure. Une tôle centrale 7 est intercalée entre une première 6 et une deuxième 8 tôles d'extrémité.

La première 6 tôle d'extrémité est destinée à venir en contact mécanique avec le plan d'une cathode 2.1 de la cellule C1 d'électrolyse élémentaire et la tôle centrale 7 est destinée à venir en contact mécanique avec le plan d'une anode 4.1 d'une cellule d'électrolyse élémentaire adjacente, chacune des deux cellules d'électrolyse élémentaires adjacentes (C1, C2) de type SOEC étant formée d'une cathode 2.1, 2.2, d'une anode 4.1, 4.2 et d'un électrolyte 3.1, 3.2 intercalé entre la cathode et l'anode.

Chacune des trois tôles planes 6, 7, 8 comporte une partie centrale 60, 70, 80.

Les parties centrales 60, 70 de la tôle centrale 7 et de la première tôle d'extrémité 6 sont non percée tandis que celle 80 de la deuxième tôle d'extrémité 80 est percée.

Chaque tôle 6, 7, 8 est percée, à la périphérie de sa partie centrale, de six lumières 61, 62, 63, 64, 65, 66 ; 71, 72, 73, 74, 75, 66 ; 81, 82, 83, 84, 85, 86.

Les premières 61, 71, 81 à quatrième 64, 74, 84 lumières de chaque tôle sont allongées sur une longueur correspondant à une partie de la longueur de la partie centrale 60, 70, 80 selon l'un des axes X des tôles et sont réparties deux à deux de part et d'autre dudit axe X.

La cinquième 65, 75, 85 lumière est allongée sur une longueur correspondant sensiblement à la longueur de la partie centrale 60, 70, 80 selon l'autre des axes Y.

La sixième 66, 76, 86 lumière est allongée sur une longueur correspondant sensiblement à la longueur de la partie centrale 60, 70, 80 selon l'autre des axes Y.

La première 6 tôle d'extrémité comporte en outre une septième 67 et huitième 68 lumières agencées symétriquement de part et d'autre de l'axe X, à l'intérieur de ses premières à quatrième lumières 61 à 64, et sont allongées sur une longueur correspondant sensiblement à la longueur de la partie centrale selon l'axe X.

La deuxième 8 tôle d'extrémité comporte en outre une septième 87 lumière et huitième 88 lumière agencées symétriquement de part et d'autre de l'axe Y, à l'intérieur respectivement de sa cinquième 85 lumière et sa sixième lumière 86, et allongée sur une longueur correspondant sensiblement la longueur de la partie centrale selon ledit axe Y.

Comme visible sur la figure 6A, les première 71, troisième 73, cinquième 75 et sixième 76 lumières de la tôle centrale 7 sont élargies par rapport respectivement aux première 61, 81, troisième 63, 83, cinquième 65, 85 et sixième 66, 86 lumières de chaque tôle d'extrémité 6, 8.

Les deuxième 62, 72, 82 et quatrième 64, 74, 84 lumières des trois tôles sont de dimensions sensiblement identiques entre elles.

La stratification et l'assemblage des trois tôles 6, 7, 8 entre elles sont réalisées telles que:

- chacune des première à sixième 61 à 66 lumières de l'une des trois tôles est en communication fluidique individuellement respectivement avec l'une des première à sixième 71 à 76 et 81 à 86 lumières correspondantes des deux autres tôles 7, 8.
- la première lumière 61 de la première 6 tôle d'extrémité est en communication fluidique avec la septième lumière 67 de la première 6 tôle d'extrémité par le biais de la première lumière 71 de la tôle centrale 7,
- la troisième lumière 63 de la première 6 tôle d'extrémité est en communication fluidique avec la huitième lumière 68 de la première 6 tôle d'extrémité par le biais de la troisième lumière 73 de la tôle centrale 7,
- la cinquième 85 et la septième 87 lumières de la deuxième 8 tôle d'extrémité sont en communication fluidique par le biais de la cinquième 75 lumière de la tôle centrale 7,
- la sixième 86 et la huitième 88 lumières de la deuxième 8 tôle d'extrémité sont en communication fluidique par le biais de la sixième 76 lumière de la tôle centrale 7.

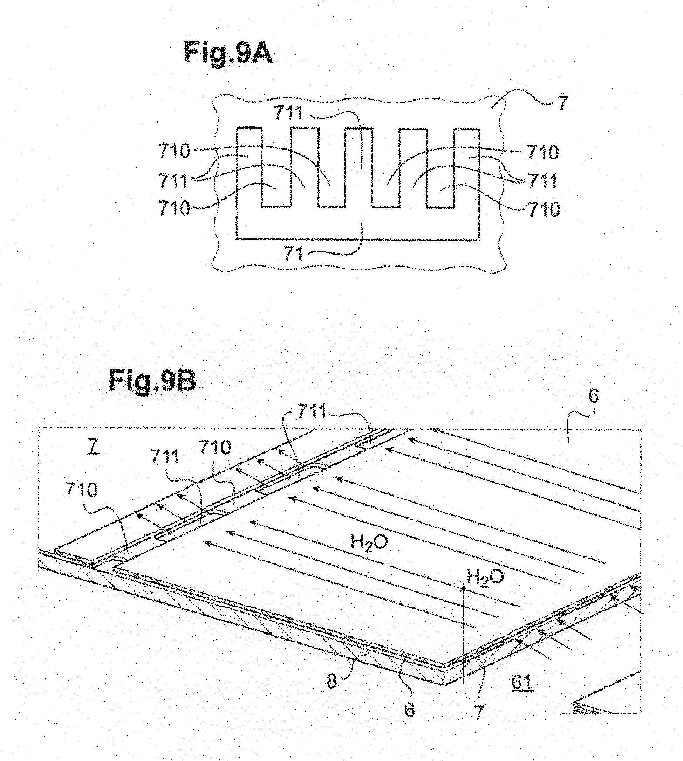

Les figures 9A et 9B montrent en détail la réalisation du peigne formé par les languettes de tôle 710 au niveau de la fente élargie 71 de la tôle centrale et son agencement entre les deux tôles d'extrémité 6, 8 afin de permettre l'alimentation d'une cellule d'électrolyse, ici en vapeur d'eau $H_2O$ ou d'une grille métallique 14 au niveau d'un étage de régulation thermique comme détaillé par la suite. Ainsi, le peigne formé 710, 711 permet à la vapeur d'eau de passer de la clarinette d'alimentation 61, 71, 81 à la fente de distribution 67 en passant dans l'espace entre les deux tôles d'extrémité 6, 8. L'épaisseur de la tôle 7 centrale au niveau de ce peigne 710, 711 lui confère une fonction d'entretoise et garantit ainsi la hauteur du passage pour la vapeur d'eau dans l'espace inter-tôles d'extrémité 6, 8. Un tel passage des gaz selon l'invention par l'intérieur de l'interconnecteur 5.1 a pour avantage de libérer une surface plane pour la réalisation des étanchéités. En outre, on obtient grâce à ces formes de peignes pour les fentes élargies 71, 75 une distribution homogène de chaque gaz ($H_2O$, Air) sur chaque cellule d'électrolyse et sur chaque grille métallique de l'étage thermique, et grâce à ces formes de peigne pour les fentes élargies 73, 76 une récupération du gaz produit ($H_2$, $O_2$) ou du gaz caloporteur. Ces distributions ou récupérations homogènes ou autrement dit uniformes en débit sont montrée sur les différentes figures 6A à 8, sous la forme de petites flèches espacées les unes des autres.

Pour réaliser l'interconnecteur 5.2 représenté en figure 6B qui permet à la fois d'amener le gaz drainant au niveau de la cellule C1 et le gaz caloporteur au niveau de la grille métallique 14, on utilise les mêmes trois tôles planes 6, 7, 8 que celles utilisées pour la réalisation de l'interconnecteur 5.1 mais en procédant uniquement à un retournement de la tôle centrale 7 dessus-dessous avant sa stratification et l'assemblage avec les deux tôles d'extrémité 6, 8.

Ainsi, dans l'interconnecteur 5.2, les trois tôles 6, 7, 8 sont stratifiées et assemblées entre elles telles que:

- chacune des première à sixième 61 à 66 lumières de l'une des trois tôles est en communication fluidique individuellement respectivement avec l'une des première à sixième 71 à 76 et 81 à 86 lumières correspondantes des deux autres tôles 7, 8,
- la deuxième lumière 62 de la première 6 tôle d'extrémité est en communication fluidique avec la septième 67 lumière de la première 6 tôle d'extrémité par le biais de la troisième 73 lumière de la tôle centrale 7,
- la quatrième lumière 64 de la première 6 tôle d'extrémité est en communication fluidique avec la huitième 68 lumière de la première 6 tôle d'extrémité par le biais de la première 71 lumière de la tôle centrale 7,

- la cinquième 85 et la septième 87 lumières de la deuxième 8 tôle d'extrémité sont en communication fluidique par le biais de la cinquième 75 lumière de la tôle centrale 7,
- la sixième 86 et la huitième 88 lumières de la deuxième 8 tôle d'extrémité sont en communication fluidique par le biais de la sixième 76 lumière de la tôle centrale 7.

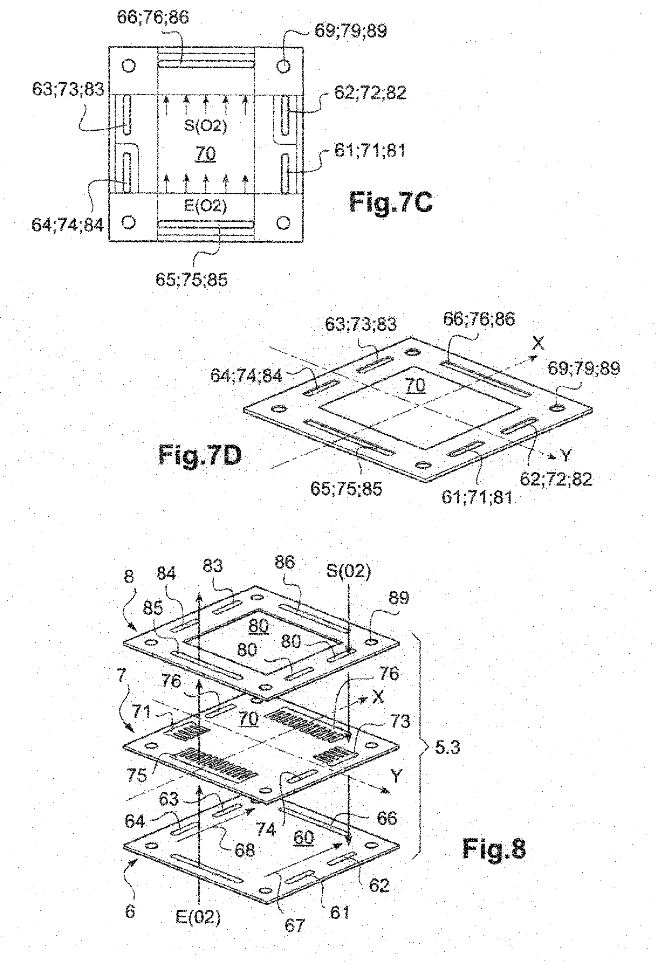

Pour réaliser l'interconnecteur 5.3 représenté en figure 8 qui permet de ne pas amener de gaz drainant ou oxygène ni récupérer de gaz comburant au niveau de la grille métallique 14, on utilise les mêmes trois tôles planes 6, 7, 8 que celles utilisées pour la réalisation des interconnecteurs 5.1 et 5.2 en conservant l'ensemble des lumières dédiées à l'alimentation/récupération des gaz à l'exception des lumières 87, 88 qui sont supprimées.

Autrement dit, on crée un interconnecteur 5.3 dédié à un étage de régulation thermique en partant exactement des mêmes tôles planes 6, 7, 8 constitutives des interconnecteurs 5.1, 5.2 dédiés à un étage électrochimique et en supprimant les uniquement les lumières 87, 88 ou fentes dédiées usuellement à la fonction d'alimentation en gaz drainant et de récupération de l' oxygène $O_2$ produit.

Ainsi, selon l'invention, à l'aide d'un interconnecteur identique dans sa structure à tôles planes stratifiées et assemblées et dans ses épaisseurs et formes à ceux dédiés aux étages électrochimiques, on réalise un étage dédié à la régulation thermique.

Grâce à l'invention, on obtient ainsi un empilement alterné d'étages de régulation thermique et d'étages électrochimiques dont la régulation thermique en particulier au centre de l'empilement est très efficace et dont le coût de réalisation est moindre par rapport aux solutions selon l'état de l'art puisque tous les interconnecteurs 5.1, 5.2, 5.3 sont réalisés avec les mêmes tôles planes 6, 7, 8 et donc selon les mêmes gammes de fabrication et certaines cellules d'électrolyse sont remplacées par des grilles métalliques qui assurent la continuité électrique au travers de l'empilement.

On décrit maintenant en référence aux figures 6A à 8, le procédé de fonctionnement d'un réacteur d'électrolyse selon l'invention tel qu'il vient d'être décrit:

On alimente les premières 61, 71, 81 lumières en vapeur d'eau EH2(1) des interconnecteurs 5.1 à 5.3 et simultanément les deuxièmes 62, 72, 82 lumières de l'interconnecteur 5.1 à 5.3 en gaz caloporteur EH2(2).

Le gaz caloporteur EH2(2) traverse l'interconnecteur 5.1 sans être distribué à la cathode 2.1 de la cellule C1. Elle alimente les lumières 62, 73, et 82 de l'interconnecteur 5.2.

De même, la vapeur d'eau EH2(1) traverse l'interconnecteur 5.2 sans être distribuée sur la grille métallique 14.

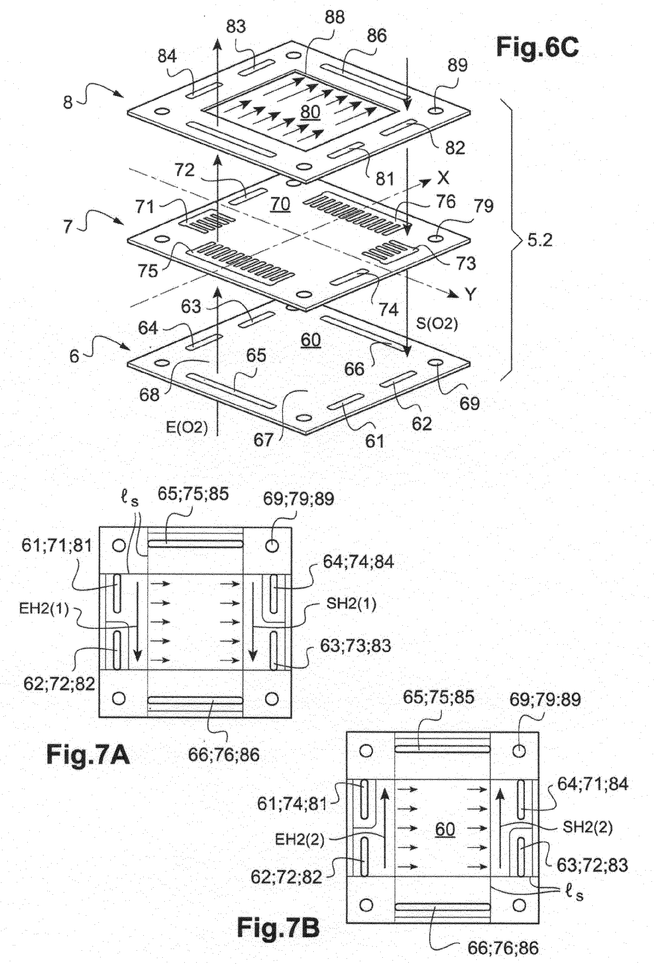

Le parcours au sein d'un interconnecteur 5.1, de la vapeur d'eau injectée et de l'hydrogène produit est schématisé en figures 6A et 7A.

Le parcours au sein d'un interconnecteur 5.2 du gaz caloporteur au sein d'un interconnecteur 5.2 est schématisé en figures 6B et 7B.

En outre, on alimente les cinquième 65, 75, 85 lumière des trois tôles 8 de chaque interconnecteur 5.1, 5.2, 5.3 par un gaz drainant $E(O_2)$, tel que de l'air.

Le parcours de l'air en tant que gaz drainant injecté et de l'oxygène produit au sein d'un interconnecteur 5.1 ou 5.2 est schématisé en figure 6C.

Du fait de l'absence des lumières 87, 88 au sein de l'interconnecteur 5.3, le gaz drainant n'est pas distribué/récupéré sur la grille métallique 14.

On récupère ainsi l'hydrogène produit SH2(1) par l'électrolyse de la vapeur d'eau au niveau de la cellule C1, dans les troisièmes 63, 73, 83 lumières de l'interconnecteur 5.1.

On récupère de manière séparée le gaz caloporteur SH2(2) ayant circulé à des fins de gestion thermique au niveau de la grille métallique 14, dans les quatrième 64, 84 lumières des tôles d'extrémité et la première lumière 71 de l'interconnecteur 5.2.

Simultanément, on récupère l'oxygène $O_2$ produit $S(O_2)$ dans les sixième 66, 76, 86 lumières des trois tôles 8 de chaque interconnecteur 5.1, 5.2.

L'alimentation de la vapeur d'eau et la récupération de l'hydrogène produit ainsi que l'alimentation en gaz drainant et la récupération en oxygène produit montrées aux figures 6A à 6C constitue une circulation en co-courant de combustible/gaz caloporteur d'une cellule C1 par rapport à la grille métallique 14 adjacente, et à courant croisés avec la circulation de gaz drainant/oxygène produit commune.

Avec les deux types d'interconnecteurs 5.1, 5.2 on peut aussi réaliser en tant que variante, une circulation à contre-courant de combustible/gaz caloporteur d'une cellule C1 par rapport à la grille métallique 14 adjacente, et à courant croisés avec la circulation de gaz drainant/oxygène produit.

Les trois tôles planes 6, 7, 8 constituant chaque interconnecteur 5.1, 5.2, 5.3 selon l'invention sont des tôles minces métalliques planes, percées et assemblées entre elles par soudures. De préférence, les tôles minces sont des tôles d'épaisseur inférieure à 3mm, typiquement de l'ordre de 0,2 mm. Toutes les soudures entre tôles réalisées à la fabrication, en dehors de tout fonctionnement de l'électrolyseur peuvent être réalisées avantageusement selon une technique de laser par transparence, ce qui est possible du fait de la faible épaisseur des tôles minces, typiquement de l'ordre de 0,2 mm.

Toutes les tôles sont avantageusement en acier ferritique avec de l'ordre de 20% de chrome, de préférence en CROFER® 22APU ou le FT18TNb, à base Nickel de type Inconel® 600 ou Haynes® dans des épaisseurs typiquement comprises entre 0,1 et 1 mm.

L'assemblage par lignes de soudures ls autour des lumières entre tôles planes 6, 7, 8 garantit une bonne étanchéité lors du fonctionnement de l'électrolyseur entre la vapeur d'eau $EH_2(1)$ amenée aux interconnecteurs 5.1 en tant que « combustible », le gaz caloporteur $EH_2(2)$ amenée aux interconnecteurs 5.2, 5.3 en tant que gestion thermique, l'hydrogène $SH_2(1)$ récupéré aux interconnecteurs 5.1, le gaz caloporteur $SH_2(2)$ récupérée aux interconnecteurs 5.2, le gaz drainant amené E(02) et l'oxygène S(02) récupéré. Les lignes de soudures sont illustrées aux figures 10A à 10C

Tel qu'illustré sur l'ensemble des figures 5 à 8, les trois tôles 6, 7, 8 sont percées à leur périphérie de lumières supplémentaires 69, 79, 89 adaptées pour loger des tirants de fixation. Ces tirants de fixation permettent d'appliquer une force de maintien à l'empilement des différents composants à la fois des étages électrochimiques et des étages de régulation thermique du réacteur d'électrolyse.

D'autres variantes et améliorations peuvent être envisagées dans le cadre de l'invention.

Ainsi, si dans le mode de réalisation illustré, le gaz caloporteur est du type vapeur d'eau avec de l'hydrogène, on peut tout aussi bien envisager que le gaz drainant soit également le gaz caloporteur. Plus généralement, le gaz caloporteur peut être n'importe quel gaz, à la condition qu'il soit adapté au(x) matériau(x) des éléments de contact 14, c'est-à-dire qu'il n'oxyde pas ces derniers.

On pourrait d'ailleurs utiliser pour réaliser un interconnecteur dédié, de stratifier et d'assembler trois tôles planes comme celles 6, 7, 8 illustrées mais à la condition de supprimer les lumières 67, 68 de l'interconnecteur 5.2 dédiées à l'alimentation de la vapeur d'eau/hydrogène et la récupération de l'hydrogène produit et de maintenir 87 et 88 sur l'interconnecteur 5.3 au niveau d'un étage de régulation thermique. Selon cette variante, la régulation thermique serait faite par le gaz drainant (ou gaz comburant en pile SOFC). Dans ce cas, la grille métallique 14 est soit une grille résistante à l'oxydation, soit un contact électrique assuré directement en soudant l'un à l'autre deux interconnecteurs successifs 5.2, 5.3. Les soudures entre ces deux interconnecteurs 5.2, 5.3 doivent alors assurer les étanchéités et le passage du courant.

Les étages électrochimiques et les étages de régulation thermique peuvent être en parallèle si les clarinettes d'alimentation/récupération des gaz restent indépendantes ou en série si elles sont raccordées entre elles à l'extérieur de l'empilement.

Le raccord en série entre étages électrochimiques et étages de régulation thermique permet de préchauffer de manière efficace la vapeur d'eau dédiée à l'électrolyse de l'eau avant son entrée sur les cathodes des cellules d'électrolyse.

## Revendications

1. Réacteur d'électrolyse à haute température (EHT) comportant un empilement alterné de deux groupes d'étages distincts dont :

   - un groupe d'une pluralité d'étages, dits étages électrochimiques, constitués chacun d'une cellule d'électrolyse élémentaire (C1, C2, C3) de type à oxydes solides SOEC formée d'une cathode (2.1, 2.2, ...), d'une anode (4.1, 4.2, ...) et d'un électrolyte (3.1, 3.2...) intercalé entre la cathode et l'anode, et de deux interconnecteurs (5.1, 5.2), adaptés chacun pour l'interconnexion électrique et fluidique, agencés de part et d'autre de la cellule élémentaire (C1, C2),

   - un groupe d'au moins un étage, dit étage(s) de régulation thermique constitué(s) d'au moins un élément de contact électrique (14) laissant passer les gaz et de deux interconnecteurs (5.2, 5.3) adaptés chacun pour l'interconnexion électrique et fluidique, agencés de part et d'autre de l'élément de contact, l'élément de contact étant une grille métallique, un ensemble de fils métalliques discrets ou un substrat poreux conducteur électronique,

   les interconnecteurs des étages électrochimiques et de(s) l'étage(s) thermique(s) étant adaptés pour à la fois :

   • faire circuler à travers l'empilement, de la vapeur d'eau (EH2(1)) ou un mélange de vapeur d'eau $H_2O$ et de dioxyde de carbone $CO_2$, un gaz drainant, tel que de l'air, (E(O2)), et un gaz caloporteur (EH2(2)),

   • récupérer l'hydrogène H2 produit (SH2(1)) ou le gaz de synthèse (mélange de monoxyde de carbone CO et d'hydrogène H2) produit aux cathodes des cellules, l'oxygène $O_2$ produit (S($O_2$)) aux anodes des cellules et le gaz drainant, et le gaz caloporteur (SH2(2)) en sortie des éléments (14),

la partie des interconnecteurs dédiée aux étages électrochimiques étant en outre adaptés pour distribuer à la fois la vapeur d'eau (EH$_2$(1)) ou le mélange de vapeur d'eau H$_2$O et de dioxyde de carbone CO$_2$, aux cathodes des cellules, et le gaz drainant (E(O$_2$)) aux anodes des cellules, tandis que la partie des interconnecteurs dédiée à (aux) l'étage(s) de régulation thermique sont adaptés pour distribuer uniquement le gaz caloporteur à l' (aux) élément(s) de contact électrique (14) laissant passer les gaz.

2.  Pile à combustible à haute température (SOFC) comportant un empilement alterné de deux groupes d'étages distincts dont :

    - un groupe d'une pluralité d'étages, dits étages électrochimiques, constitués chacun d'une cellule électrochimique élémentaire (C1, C2, C3) de type à oxydes solides SOFC formée d'une cathode (2.1, 2.2, ...), d'une anode (4.1, 4.2, ...) et d'un électrolyte (3.1, 3.2...) intercalé entre la cathode et l'anode, et de deux interconnecteurs (5.1, 5.2) adaptés chacun pour l'interconnexion électrique et fluidique et agencés de part et d'autre de la cellule élémentaire (C1, C2),
    - un groupe d'au moins un étage, dit étage(s) de régulation thermique constitué(s) d'au moins un élément de contact électrique (14) laissant passer les gaz et de deux interconnecteurs (5.2, 5.3) adaptés chacun pour l'interconnexion électrique et fluidique, agencés de part et d'autre de l'élément de contact, l'élément de contact étant une grille métallique, un ensemble de fils métalliques discrets ou un substrat poreux conducteur électronique,

    les interconnecteurs des étages électrochimiques et de(s) l'étage(s) thermique(s) étant adaptés pour à la fois :

    • faire circuler à travers l'empilement, un combustible (EH$_2$(1)), un comburant, tel que de l'air, (E(O2)), et un gaz caloporteur (EH$_2$(2)),
    • récupérer le surplus de combustible et l'eau produite (SH$_2$(1)) aux anodes des cellules, le surplus de comburant (S(O$_2$)) aux cathodes des cellules et, et le gaz caloporteur (SH$_2$(2)) en sortie des éléments (14),

    la partie des interconnecteurs dédiée aux étages électrochimiques étant en outre adaptés pour distribuer à la fois le combustible (EH$_2$(1)) aux anodes des cellules, et le comburant, (E(O$_2$)) aux anodes des cellules, tandis que la partie des interconnecteurs dédiée à (aux) l'étage(s) de régulation thermique sont adaptés pour distribuer uniquement le gaz caloporteur à l'(aux) élément(s) de contact électrique (14) laissant passer les gaz.

3.  Réacteur d'électrolyse à haute température (EHT) ou pile à combustible à haute température (SOFC) selon la revendication 1 ou 2, l'élément de contact électrique laissant passer les gaz étant une grille métallique.

4.  Réacteur d'électrolyse à haute température (EHT) ou pile à combustible à haute température (SOFC) selon l'une des revendications 1 à 3, les interconnecteurs des étages électrochimiques consistant chacun en un dispositif constitué de trois tôles planes (6, 7, 8), allongées selon deux axes de symétrie (X, Y) orthogonaux entre eux, l'une des tôles d'extrémité étant destinée à venir en contact mécanique avec le plan d'une cathode (2) d'une cellule (C2) élémentaire et l'autre des tôles d'extrémité étant destinée à venir en contact mécanique avec le plan d'une anode (4) d'une cellule (C1) élémentaire adjacente, dispositif dans lequel :

    - les parties centrales (60, 70) de la tôle centrale (7) et d'une des tôles d'extrémité, dite première tôle d'extrémité, (6) sont non percées tandis que la partie centrale (8) de l'autre tôle d'extrémité, dite deuxième tôle d'extrémité (8) est percée (80),
    - chacune des trois tôles planes (6, 7, 8) est percée, à la périphérie de sa partie centrale, de six lumières (61, 62, 63, 64, 65, 66 ; 71, 72, 73, 74, 75, 76 ; 81, 82, 83, 84, 85, 86), les premières à quatrième lumières (61 à 64 ; 71 à 74 ; 81 à 84) de chaque tôle étant allongées sur une longueur correspondant à une partie de la longueur de la partie centrale selon l'un des axes X des tôles et étant réparties deux à deux de part et d'autre dudit axe X, tandis que les cinquièmes et sixièmes (65, 75, 85 ; 66,76, 86) lumières sont allongées sur une longueur correspondant sensiblement à la longueur de la partie centrale selon l'autre des axes Y,
    - la première tôle d'extrémité (6), comporte en outre une septième (67) et une huitième (68) lumières agencées symétriquement de part et d'autre de l'axe X, à l'intérieur de ses premières à quatrième lumières (61, 62, 63, 64), et allongées sur une longueur correspondant sensiblement à la longueur de la partie centrale selon l'axe X,
    - la deuxième (8) des tôles d'extrémité, comporte en outre une septième (87) et une huitième (88) lumières agencées symétriquement de part et d'autre de l'axe Y à l'intérieur respectivement de sa cinquième (85) et de sa sixième (86) lumière, et allongées sur une longueur correspondant sensiblement la longueur de la partie centrale selon ledit axe Y, et,

- les première (71), troisième (73), cinquième (75) et sixième lumières de la tôle centrale (7) sont élargies par rapport respectivement aux première (61, 81), troisième (63, 83), cinquième (65, 85) et sixième (66, 86) lumières de chaque tôle d'extrémité, tandis que les deuxième (62, 72, 82) et quatrième (64, 74, 84) lumière des trois tôles sont de dimensions sensiblement identiques entre elles,

- toutes les lumières élargies (71, 73, 75, 76) de la tôle centrale (7) comportent dans leur partie élargie, des languettes de tôles espacées les unes des autres en formant un peigne, chacune des fentes définie entre le bord d'une fente élargie (71, 73, 75, 76) et une languette ou entre deux languettes consécutives débouchant sur une des lumières intérieures de la première (6) ou deuxième (8) tôle d'extrémité,

- les trois tôles (6, 7, 8) sont stratifiées et assemblées entre elles telles que:

• les languettes de tôles forment des entretoises d'espacement entre première (6) et deuxième (8) tôles d'extrémité respectivement entre les première (61) et septième (67) lumières de la première tôle d'extrémité (6), entre les troisième (63) et huitième (68) lumières de la première tôle d'extrémité (6), entre les cinquième (85) et septième (87) lumières de la deuxième tôle d'extrémité (8), et entre les sixième (86) et huitième (88) lumières de la deuxième tôle d'extrémité (8),

• chacune des première à sixième lumières (61 à 66) de l'une des trois tôles est en communication fluidique individuellement respectivement avec l'une des première à sixième lumières (71 à 76 ; 81 à 86) correspondantes des deux autres tôles,

• la première (61) ou alternativement la deuxième (62) lumière de la première (6) tôle d'extrémité est en communication fluidique avec la septième (66) lumière de la première (6) tôle d'extrémité par le biais des fentes la première (71) lumière élargie de la tôle centrale (7),

• la troisième (63) ou alternativement la quatrième (64) lumière de la première (6) tôle d'extrémité est en communication fluidique avec la huitième (68) lumière de la première (6) tôle d'extrémité par le biais des fentes de la troisième (73) lumière élargie de la tôle centrale (7),

• la cinquième (85) et la septième (87) lumières de la deuxième (8) tôle d'extrémité sont en communication fluidique par le biais des fentes de la cinquième (75) lumière élargie de la tôle centrale (7),

• la sixième (86) et la huitième (88) lumières de la deuxième (8) tôle d'extrémité sont en communication fluidique par le biais des fentes de la sixième (76) lumière élargie de la tôle centrale (7).

5. Réacteur d'électrolyse à haute température (EHT) ou pile à combustible à haute température (SOFC) selon la revendication 4, au moins un des deux interconnecteurs des étages de régulation thermique étant constitué à partir des trois tôles que les interconnecteurs des étages électrochimiques, mais ne comportent pas les septième (87) et huitième (88) lumière de la deuxième tôle d'extrémité (8).

6. Réacteur d'électrolyse à haute température (EHT) ou pile à combustible à haute température (SOFC) selon la revendication 4 ou 5, les deux interconnecteurs d'un même étage électrochimique (5.1, 5.2) sont constitués chacun à partir de trois tôles planes identiques (6, 7, 8), mais avec la tôle centrale de l'un des interconnecteurs retournée dessus/dessous par rapport à la tôle centrale de l'autre des interconnecteurs.

7. Réacteur d'électrolyse à haute température (EHT) ou pile à combustible à haute température (SOFC) selon l'une des revendications précédentes, comprenant un nombre d'étages de régulation thermique différent du nombre d'étages électrochimiques.

8. Réacteur d'électrolyse à haute température (EHT) ou pile à combustible à haute température (SOFC) selon l'une des revendications précédentes, comprenant un nombre d'étages de régulation thermique supérieur au centre de l'empilement que sur les extrémités de l'empilement.

9. Réacteur d'électrolyse à haute température (EHT) ou pile à combustible à haute température (SOFC) selon l'une des revendications précédentes, dans lequel (laquelle) aucun étage de régulation thermique n'est visible depuis l'extérieur de l'empilement.

10. Procédé d'électrolyse à haute température de la vapeur d'eau $H_2O$, ou de co-électrolyse de la vapeur d'eau $H_2O$ et du dioxyde de carbone $CO_2$, mis en œuvre dans un réacteur selon une des revendications 1, ou 3 à 9, selon lequel:

- on alimente, depuis les interconnecteurs (5.1, 5.2) des étages électrochimiques, la vapeur d'eau ($EH_2(1)$) ou un mélange de vapeur d'eau $H_2O$ et de dioxyde de carbone $CO_2$, en tant que combustible, et on la (le) distribue aux cathodes des cellules, puis on récupère l'hydrogène $H_2$ produit ($SH_2(1)$) ou le gaz de synthèse (mélange de monoxyde de carbone CO et d'hydrogène $H_2$) en sortie des cathodes,

- on alimente, depuis les interconnecteurs (5.1, 5.2) des étages électrochimiques, un gaz drainant, tel que de l'air, (E(O2)), et on le distribue aux anodes des cellules, puis on récupère l'oxygène 02 produit et le gaz drainant $(S(O_2))$ en sortie des anodes,

- on alimente, depuis les interconnecteurs (5.2, 5.3) des étages de régulation thermique, un gaz caloporteur $(EH_2(2))$ et on le distribue aux éléments de contact électrique (14), puis on le récupère en sortie des éléments (14),

selon lequel le gaz caloporteur $(EH_2(2))$ est de préférence le combustible (vapeur d'eau $H_2O$, ou mélange de vapeur d'eau $H_2O$ et d'hydrogène $H_2$, ou mélange de vapeur d'eau $H_2O$ et de dioxyde de carbone $CO_2$) ou le gaz drainant, tel que de l'air, (E(O2)).

11. Procédé de production d'électricité à haute température, mis en œuvre dans une pile à combustible à oxydes solides (SOFC) selon l'une des revendications 2 à 9, selon lequel :

- on alimente depuis les interconnecteurs (5.1, 5.2) des étages électrochimiques, le combustible $(EH_2(1))$, et on le distribue aux anodes des cellules, puis on récupère le surplus de combustible et l'eau produite $(SH_2(1))$ en sortie des anodes,

- on alimente depuis les interconnecteurs (5.1, 5.2) des étages électrochimiques le comburant, tel que de l'air, (E(O2)), et on le distribue aux cathodes des cellules, puis on récupère le surplus de comburant S(O2)) en sortie des cathodes,

- on alimente depuis les interconnecteurs (5.2, 5.3) des étages de régulation thermique, un gaz caloporteur $(EH_2(2))$ et on le distribue aux éléments de contact électrique (14), puis on le récupère en sortie des éléments (14).

le combustible étant de préférence l'hydrogène ou le méthane $(CH_4)$.

12. Procédé d'électrolyse à haute température de la vapeur d'eau $H_2O$, ou de co-électrolyse de la vapeur d'eau $H_2O$ et du dioxyde de carbone $CO_2$, selon la revendication 10, et procédé de production d'électricité à haute température selon revendication 12, selon lequel l'alimentation du gaz combustible est reliée en série à celle du gaz caloporteur.

13. Procédé d'électrolyse à haute température de la vapeur d'eau $H_2O$, ou de co-électrolyse de la vapeur d'eau $H_2O$ et du dioxyde de carbone $CO_2$, selon l'une des revendications 10 ou 12, et procédé de production d'électricité à haute température selon l'une des revendications 11 ou 12, selon lequel l'alimentation du gaz combustible est en parallèle de celle du gaz caloporteur.

14. Procédé d'électrolyse à haute température de la vapeur d'eau $H_2O$, ou de co-électrolyse de la vapeur d'eau H2O et du dioxyde de carbone CO2, selon l'une des revendications 10 ou 12, et procédé de production d'électricité à haute température selon l'une des revendications 11 ou 12, selon lequel l'alimentation du gaz combustible est à contre-courant de celle du gaz caloporteur.

15. Procédé d'électrolyse à haute température de la vapeur d'eau H2O, ou de co-électrolyse de la vapeur d'eau H2O et du dioxyde de carbone CO2, selon l'une des revendications 10 ou 12 à 14, et procédé de production d'électricité à haute température selon l'une des revendications 11 ou 12 à 14, selon lequel on met en œuvre une réaction chimique exothermique ou endothermique entre le gaz caloporteur et les éléments de contact électrique (14).

**Patentansprüche**

1. Reaktor zur Hochtemperaturelektrolyse (HTE), der einen alternierenden Stapel aus zwei verschiedenen Gruppen von Stufen umfasst, darunter:

- eine Gruppe aus einer Mehrzahl von Stufen, elektrochemische Stufen genannt, die jeweils aus einer elementaren Elektrolysezelle (C1, C2, C3) vom Festoxidtyp SOEC, die aus einer Kathode (2.1, 2.2, ...), einer Anode (4.1, 4.2, ...) und einem zwischen der Kathode und der Anode angeordneten Elektrolyten (3.1, 3.2 ...) gebildet ist, und aus zwei Interkonnektoren (5.1, 5.2), die jeweils zum elektrischen und fluidischen Verbinden geeignet sind und die beidseits der elementaren Zelle (C1, C2) angeordnet sind, bestehen,
- eine Gruppe aus mindestens einer Stufe, Wärmeregulierungsstufe(n) genannt, die aus mindestens einem elektrischen Kontaktelement (14), das die Gase durchlässt, und aus zwei Interkonnektoren (5.2, 5.3), die jeweils zum elektrischen und fluidischen Verbinden geeignet sind und die beidseits des Kontaktelements angeordnet sind, besteht(bestehen), wobei das Kontaktelement ein Metallgitter, eine Anordnung aus diskreten Metalldrähten oder ein elektronisches leitfähiges poröses Substrat ist,

wobei die Interkonnektoren der elektrochemischen Stufen und der thermischen Stufe(n) dazu geeignet sind, gleichzeitig:

• durch den Stapel hindurch Wasserdampf (EH$_2$(1)) oder ein Gemisch aus Wasserdampf H$_2$O und Kohlendioxid CO$_2$, ein Trocknungsgas wie Luft (E(O2)) und ein Wärmeträgergas (EH$_2$(2)) strömen zu lassen,
• den erzeugten Wasserstoff H$_2$ (SH$_2$(1)) oder das Synthesegas (Gemisch aus Kohlenmonoxid CO und Wasserstoff H$_2$), das an den Kathoden der Zellen erzeugt wird, den an den Anoden der Zellen erzeugten Sauerstoff O$_2$ (S(O$_2$)) und das Trocknungsgas und das Wärmeträgergas (SH$_2$(2)) am Auslass der Elemente (14) zurückzugewinnen, wobei der für die elektrochemischen Stufen dedizierte Teil der Interkonnektoren ferner dazu geeignet ist, gleichzeitig Wasserdampf (EH$_2$(1)) oder das Gemisch aus Wasserdampf H$_2$O und Kohlendioxid CO$_2$ zu den Kathoden der Zellen und das Trocknungsgas (E(O$_2$)) zu den Anoden der Zellen zu verteilen,

während der für die Wärmeregulierungsstufe(n) dedizierte Teil der Interkonnektoren dazu geeignet ist, nur das Wärmeträgergas zu dem(den) elektrischen Kontaktelement(en) (14), das(die) die Gase durchlässt(durchlassen), zu verteilen.

2. Hochtemperatur-Brennstoffzelle (SOFC), die einen alternierenden Stapel aus zwei verschiedenen Gruppen von Stufen umfasst, darunter:

- eine Gruppe aus einer Mehrzahl von Stufen, elektrochemische Stufen genannt, die jeweils aus einer elementaren elektrochemischen Zelle (C1, C2, C3) vom Festoxidtyp SOFC, die aus einer Kathode (2.1, 2.2, ...), einer Anode (4.1, 4.2, ...) und einem zwischen der Kathode und der Anode angeordneten Elektrolyten (3.1, 3.2 ...) gebildet ist, und aus zwei Interkonnektoren (5.1, 5.2), die jeweils zum elektrischen und fluidischen Verbinden geeignet sind und die beidseits der elementaren Zelle (C1, C2) angeordnet sind, bestehen,
- eine Gruppe aus mindestens einer Stufe, Wärmeregulierungsstufe(n) genannt, die aus mindestens einem elektrischen Kontaktelement (14), das die Gase durchlässt, und aus zwei Interkonnektoren (5.2, 5.3), die jeweils zum elektrischen und fluidischen Verbinden geeignet sind und die beidseits des Kontaktelements angeordnet sind, besteht(bestehen), wobei das Kontaktelement ein Metallgitter, eine Anordnung aus diskreten Metalldrähten oder ein elektronisches leitfähiges poröses Substrat ist,

wobei die Interkonnektoren der elektrochemischen Stufen und der thermischen Stufe(n) dazu geeignet sind, gleichzeitig:

• durch den Stapel hindurch einen Brennstoff (EH$_2$(1)), ein Oxidationsmittel wie Luft (E(O$_2$)) und ein Wärmeträgergas (EH$_2$(2)) strömen zu lassen,
• den Brennstoffüberschuss und das erzeugte Wasser (SH$_2$(1)) an den Anoden der Zellen, den Oxidationsmittelüberschuss (S(O$_2$)) an den Kathoden der Zellen und das Wärmeträgergas (SH$_2$(2)) am Auslass der Elemente (14) zurückzugewinnen,

wobei der für die elektrochemischen Stufen dedizierte Teil der Interkonnektoren ferner dazu geeignet ist, gleichzeitig den Brennstoff (EH$_2$(1)) zu den Anoden der Zellen und das Oxidationsmittel (E(O$_2$)) zu den Anoden der Zellen zu verteilen,

während der für die Wärmeregulierungsstufe(n) dedizierte Teil der Interkonnektoren dazu geeignet ist, nur das Wärmeträgergas zu dem (den) elektrischen Kontaktelement(en) (14), das(die) die Gase durchlässt(durchlassen), zu verteilen.

3. Reaktor zur Hochtemperaturelektrolyse (HTE) oder Hochtemperatur-Brennstoffzelle (SOFC) nach Anspruch 1 oder 2, wobei das die Gase durchlassende elektrische Kontaktelement ein Metallgitter ist.

4. Reaktor zur Hochtemperaturelektrolyse (HTE) oder Hochtemperatur-Brennstoffzelle (SOFC) nach einem der Ansprüche 1 bis 3, wobei die Interkonnektoren der elektrochemischen Stufen jeweils in einer Vorrichtung bestehen, die aus drei ebenen Blechen (6, 7, 8) besteht, die entlang von zwei zueinander rechtwinkligen Symmetrieachsen (X, Y) langgestreckt sind, wobei eines der endständigen Bleche dazu bestimmt ist, mit der Ebene einer Kathode (2) einer elementaren Zelle (C2) in mechanischen Kontakt zu gelangen, und das andere der endständigen Bleche dazu bestimmt ist, mit der Ebene einer Anode (4) einer benachbarten elementaren Zelle (C1) in mechanischen Kontakt zu gelangen, wobei in der Vorrichtung:

- die zentralen Teile (60, 70) des zentralen Blechs (7) und eines der endständigen Bleche, erstes endständiges Blech (6) genannt, nicht durchbrochen sind, während der zentrale Teil (8) des anderen endständigen Blechs, zweites endständiges Blech (8) genannt, durchbrochen ist (80),

- jedes der drei ebenen Bleche (6, 7, 8) am Umfang seines zentralen Teils mit mindestens sechs Schlitzen (61, 62, 63, 64, 65, 66; 71, 72, 73, 74, 75, 76; 81, 82, 83, 84, 85, 86) durchbrochen ist, wobei die ersten bis vierten Schlitze (61 bis 64; 71 bis 74; 81 bis 84) jedes Blechs über eine Länge, die einem Teil der Länge des zentralen Teils entspricht, entlang einer der Achsen X der Bleche langgestreckt sind und paarweise beidseits der Achse X verteilt sind, während die fünften und sechsten Schlitze (65, 75, 85; 66, 76, 86) über eine Länge, die im Wesentlichen der Länge des zentralen Teils entspricht, entlang der anderen der Achsen Y langgestreckt sind,

- das erste endständige Blech (6) ferner einen siebten (67) und einen achten (68) Schlitz umfasst, die symmetrisch beidseits der Achse X innerhalb seiner ersten bis vierten Schlitze (61, 62, 63, 64) angeordnet sind und über eine Länge, die im Wesentlichen der Länge des zentralen Teils entspricht, entlang der Achse X langgestreckt sind,

- das zweite (8) der endständigen Bleche ferner einen siebten (87) und einen achten (88) Schlitz umfasst, die symmetrisch beidseits der Achse Y innerhalb seines fünften (85) beziehungsweise seines sechsten (86) Schlitzes angeordnet sind und über eine Länge, die im Wesentlichen der Länge des zentralen Teils entspricht, entlang der Achse Y langgestreckt sind,

- die ersten (71), dritten (73), fünften (75) und sechsten Schlitze des zentralen Blechs (7) in Bezug auf die ersten (61, 81), dritten (63, 83), fünften (65, 85) beziehungsweise sechsten (66, 86) Schlitze jedes endständigen Blechs verbreitert sind, während die zweiten (62, 72, 82) und vierten (64, 74, 84) Schlitze der drei Bleche im Wesentlichen die gleichen Abmessungen haben,

- alle verbreiterten Schlitze (71, 73, 75, 76) des zentralen Blechs (7) in ihrem verbreiterten Teil Blechzungen umfassen, die voneinander beabstandet sind und dabei einen Kamm bilden, wobei jeder der Spalte, der zwischen dem Rand eines verbreiterten Spalts (71, 73, 75, 76) und einer Zunge oder zwischen zwei aufeinander folgenden Zungen definiert ist, an einem der inneren Schlitze des ersten (6) oder zweiten (8) endständigen Blechs mündet,

- die drei Bleche (6, 7, 8) so geschichtet und zusammengefügt sind, dass:

• die Blechzungen Abstandsstege zwischen ersten (6) und zweiten (8) endständigen Blechen jeweils zwischen den ersten (61) und siebten (67) Schlitzen des ersten endständigen Blechs (6), zwischen den dritten (63) und achten (68) Schlitzen des ersten endständigen Blechs (6), zwischen den fünften (85) und siebten (87) Schlitzen des zweiten endständigen Blechs (8) und zwischen den sechsten (86) und achten (88) Schlitzen des zweiten endständigen Blechs (8) bilden,

• jeder der ersten bis sechsten Schlitze (61 bis 66) des einen der drei Bleche einzeln in Fluidverbindung mit jeweils einem der entsprechenden ersten bis sechsten Schlitze (71 bis 76; 81 bis 86) der beiden anderen Bleche steht,

• der erste (61) oder alternativ der zweite (62) Schlitz des ersten (6) endständigen Blechs in Fluidverbindung mit dem siebten (66) Schlitz des ersten (6) endständigen Blechs über Spalte des ersten (71) verbreiterten Schlitzes des zentralen Blechs (7) steht,

• der dritte (63) oder alternativ der vierte (64) Schlitz des ersten (6) endständigen Blechs in Fluidverbindung mit dem achten (68) Schlitz des ersten (6) endständigen Blechs über Spalte des dritten (73) verbreiterten Schlitzes des zentralen Blechs (7) steht,

• der fünfte (85) und der siebte (87) Schlitz des zweiten (8) endständigen Blechs in Fluidverbindung über Spalte des fünften (75) verbreiterten Schlitzes des zentralen Blechs (7) stehen,

• der sechste (86) und der achte (88) Schlitz des zweiten (8) endständigen Blechs in Fluidverbindung über Spalte des sechsten (76) verbreiterten Schlitzes des zentralen Blechs (7) stehen.

5. Reaktor zur Hochtemperaturelektrolyse (HTE) oder Hochtemperatur-Brennstoffzelle (SOFC) nach Anspruch 4, wobei mindestens einer der beiden Interkonnektoren der Wärmeregulierungsstufen aus den drei Blechen besteht, welche die Interkonnektoren der elektrochemischen Stufen, aber nicht die siebten (87) und achten (88) Schlitze des zweiten endständigen Blechs (8) umfassen.

6. Reaktor zur Hochtemperaturelektrolyse (HTE) oder Hochtemperatur-Brennstoffzelle (SOFC) nach Anspruch 4 oder 5, wobei die beiden Interkonnektoren derselben elektrochemischen Stufe (5.1, 5.2) jeweils aus drei identischen ebenen Blechen (6, 7, 8) bestehen, wobei jedoch das zentrale Blech des einen der Interkonnektoren in Bezug auf das zentrale Blech des anderen der Interkonnektoren von oben nach unten gewendet ist.

7. Reaktor zur Hochtemperaturelektrolyse (HTE) oder Hochtemperatur-Brennstoffzelle (SOFC) nach einem der vorhergehenden Ansprüche, umfassend eine Anzahl von Wärmeregulierungsstufen, die verschieden von der Anzahl der elektrochemischen Stufen ist.

8. Reaktor zur Hochtemperaturelektrolyse (HTE) oder Hochtemperatur-Brennstoffzelle (SOFC) nach einem der vorhergehenden Ansprüche, umfassend eine Anzahl von Wärmeregulierungsstufen, die im Zentrum des Stapels größer als an den Enden des Stapels ist.

9. Reaktor zur Hochtemperaturelektrolyse (HTE) oder Hochtemperatur-Brennstoffzelle (SOFC) nach einem der vorhergehenden Ansprüche, bei dem(der) keine Wärmeregulierungsstufe von außerhalb des Stapels sichtbar ist.

10. Verfahren zur Hochtemperaturelektrolyse von Wasserdampf $H_2O$ oder zur Co-Elektrolyse von Wasserdampf $H_2O$ und Kohlendioxid $CO_2$, das in einem Reaktor nach einem der Ansprüche 1 oder 3 bis 9 durchgeführt wird, bei dem:

    - von den Interkonnektoren (5.1, 5.2) der elektrochemischen Stufen aus Wasserdampf $(EH_2(1))$ oder ein Gemisch aus Wasserdampf $H_2O$ und Kohlendioxid $CO_2$ als Brennstoff zugeführt wird und zu den Kathoden der Zellen verteilt wird, dann der erzeugte Wasserstoff $H_2$ $(SH_2(1))$ oder das Synthesegas (Gemisch aus Kohlenmonoxid CO und Wasserstoff $H_2$) am Auslass der Kathoden zurückgewonnen werden,
    - von den Interkonnektoren (5.1, 5.2) der elektrochemischen Stufen aus ein Trocknungsgas wie Luft $(E(O_2))$ zugeführt wird und zu den Anoden der Zellen verteilt wird, dann der erzeugte Sauerstoff $O_2$ und das Trocknungsgas $(S(O_2))$ am Auslass der Anoden zurückgewonnen werden,
    - von den Interkonnektoren (5.2, 5.3) der Wärmeregulierungsstufen aus ein Wärmeträgergas $(EH_2(2))$ zugeführt wird und zu den elektrischen Kontaktelementen (14) verteilt wird, es dann am Auslass der Elemente (14) zurückgewonnen wird,

wobei das Wärmeträgergas $(EH_2(2))$ bevorzugt der Brennstoff (Wasserdampf $H_2O$ oder Gemisch aus Wasserdampf $H_2O$ und Wasserstoff $H_2$ oder Gemisch aus Wasserdampf $H_2O$ und Kohlendioxid $CO_2$) oder das Trocknungsgas wie Luft $(E(O_2))$ ist.

11. Verfahren zur Stromerzeugung bei hoher Temperatur, das in einer Festoxid-Brennstoffzelle (SOFC) nach einem der Ansprüche 2 bis 9 durchgeführt wird, bei dem:

    - von den Interkonnektoren (5.1, 5.2) der elektrochemischen Stufen aus der Brennstoff $(EH_2(1))$ zugeführt wird und zu den Anoden der Zellen verteilt wird, dann der Brennstoffüberschuss und das erzeugte Wasser $(SH_2(1))$ am Auslass der Anoden zurückgewonnen werden,
    - von den Interkonnektoren (5.1, 5.2) der elektrochemischen Stufen aus das Oxidationsmittel wie Luft $(E(O_2))$ zugeführt wird und zu den Kathoden der Zellen verteilt wird, dann der Oxidationsmittelüberschuss $(S(O_2))$ am Auslass der Kathoden zurückgewonnen wird,
    - von den Interkonnektoren (5.2, 5.3) der Wärmeregulierungsstufen aus ein Wärmeträgergas $(EH_2(2))$ zugeführt und zu den elektrischen Kontaktelementen (14) verteilt wird, es dann am Auslass der Elemente (14) zurückgewonnen wird.

wobei der Brennstoff bevorzugt Wasserstoff oder Methan $(CH_4)$ ist.

12. Verfahren zur Hochtemperaturelektrolyse von Wasserdampf $H_2O$ oder zur Co-Elektrolyse von Wasserdampf $H_2O$ und Kohlendioxid $CO_2$ nach Anspruch 10 und Verfahren zur Stromerzeugung bei hoher Temperatur nach Anspruch 12, bei dem die Zufuhr des Brennstoffgases in Reihe mit der des Wärmeträgergases angeschlossen ist.

13. Verfahren zur Hochtemperaturelektrolyse von Wasserdampf $H_2O$ oder zur Co-Elektrolyse von Wasserdampf $H_2O$ und Kohlendioxid $CO_2$ nach einem der Ansprüche 10 oder 12 und Verfahren zur Stromerzeugung bei hoher Temperatur nach einem der Ansprüche 11 oder 12, bei dem die Zufuhr des Brenngases parallel zu der des Wärmeträgergases ist.

14. Verfahren zur Hochtemperaturelektrolyse von Wasserdampf $H_2O$ oder zur Co-Elektrolyse von Wasserdampf $H_2O$ und Kohlendioxid $CO_2$ nach einem der Ansprüche 10 oder 12 und Verfahren zur Stromerzeugung bei hoher Temperatur nach einem der Ansprüche 11 oder 12, bei dem die Zufuhr des Brenngases im Gegenstrom zu der des Wärmeträgergases erfolgt.

15. Verfahren zur Hochtemperaturelektrolyse von Wasserdampf $H_2O$ oder zur Co-Elektrolyse von Wasserdampf $H_2O$ und Kohlendioxid $CO_2$ nach einem der Ansprüche 10 oder 12 bis 14 und Verfahren zur Stromerzeugung bei hoher Temperatur nach einem der Ansprüche 11 oder 12 bis 14, bei dem eine exotherme oder endotherme chemische Reaktion zwischen dem Wärmeträgergas und den elektrischen Kontaktelementen (14) durchgeführt wird.

**Claims**

1. A high-temperature electrolysis (HTE) reactor, comprising an alternating stack of two groups of distinct stages, including:

   - a group of a plurality of stages referred to as electrochemical stages, each consisting of an individual electrolysis cell (C1, C2, C3) of the SOEC solid oxide type, formed from a cathode (2.1, 2.2, ...), from an anode (4.1, 4.2, ...) and from an electrolyte (3.1, 3.2...) inserted between the cathode and the anode, and of two interconnectors (5.1, 5.2), each suitable for electrical and fluid interconnection, arranged either side of the individual cell (C1, C2),
   - a group of at least one stage referred to as thermal regulation stage(s), consisting of at least one electrical contact element (14) allowing the gases to pass and of two interconnectors (5.2, 5.3) each suitable for electrical and fluid interconnection, arranged either side of the contact element, the contact element being a metal grid, a set of discrete metal wires or a porous electron-conducting substrate,

   the interconnectors of the electrochemical stages and of the thermal stage(s) being suitable for both:

   • circulating, through the stack, steam ($EH_2(1)$) or a mixture of steam $H_2O$ and of carbon dioxide $CO_2$, a draining gas, such as air, ($E(O_2)$), and a heat-exchange gas ($EH_2(2)$),
   • recovering the hydrogen $H_2$ produced ($SH_2(1)$) or the synthesis gas (mixture of carbon monoxide CO and of hydrogen $H_2$) produced at the cathodes of the cells, the oxygen $O_2$ produced ($S(O_2)$) at the anodes of the cells and the draining gas, and the heat-exchange gas ($SH_2(2)$) at the outlet of the elements (14),

   those of the interconnectors intended for the electrochemical stages being also suitable for distributing both steam ($EH_2(1)$) or the mixture of steam $H_2O$ and of carbon dioxide $CO_2$ to the cathodes of the cells, and the draining gas ($E(O_2)$) to the anodes of the cells, while those of the interconnectors intended for the thermal regulation stage(s) are suitable for distributing solely the heat-exchange gas to the electrical contact element(s) (14) allowing the gases to pass.

2. A high-temperature fuel cell (SOFC), comprising an alternating stack of two groups of distinct stages, including:

   - a group of a plurality of stages referred to as electrochemical stages, each consisting of an individual electrochemical cell (C1, C2, C3) of the SOFC solid oxide type, formed from a cathode (2.1, 2.2, ...), from an anode (4.1, 4.2, ...) and from an electrolyte (3.1, 3.2...) inserted between the cathode and the anode, and of two interconnectors (5.1, 5.2), each suited for electrical and fluid interconnection, and arranged either side of the individual cell (C1, C2),
   - a group of at least one stage referred to as thermal regulation stage(s), consisting of at least one electrical contact element (14) allowing the gases to pass and of two interconnectors (5.2, 5.3) each suitable for electrical and fluid interconnection, arranged either side of the contact element, the contact element being a metal grid, a set of discrete metal wires or a porous electron-conducting substrate,

   the interconnectors of the electrochemical stages and of the thermal stage(s) being suitable for both:

   • circulating, through the stack, a fuel ($EH_2(1)$), an oxidizer, such as air, ($E(O_2)$), and a heat-exchange gas ($EH_2(2)$),
   • recovering the surplus fuel and the water produced ($SH_2(1)$) at the anodes of the cells, the surplus oxidizer ($S(O_2)$) at the cathodes of the cells and the heat-exchange gas ($SH_2(2)$) at the outlet of the elements (14),

   those of the interconnectors intended for the electrochemical stages being also suitable for distributing both the fuel ($EH_2(1)$) to the anodes of the cells and the oxidizer ($E(O_2)$) to the anodes of the cells, while those of the interconnectors intended for the thermal regulation stage(s) are suitable for distributing solely the heat-exchange gas to the electrical contact element(s) (14) allowing the gases to pass.

3. The high-temperature electrolysis (HTE) reactor or high-temperature fuel cell (SOFC) as claimed in claim 1 or 2, the electrical contact element allowing the gases to pass being a metal grid.

4. The high-temperature electrolysis (HTE) reactor or high-temperature fuel cell (SOFC) as claimed in one of claims 1 to 3, the interconnectors of the electrochemical stages each consisting of a device consisting of three flat metal sheets (6, 7, 8), elongated along two axes of symmetry (X, Y) orthogonal to one another, one of the end metal sheets being intended to come into mechanical contact with the plane of a cathode (2) of an individual cell (C2) and the other of the end metal sheets being intended to come into mechanical contact with the plane of an anode (4) of an adjacent individual cell (C1), in which device:

- the central parts (60, 70) of the central metal sheet (7) and of one of the end metal sheets, referred to as first end metal sheet (6), are not pierced, while the central part (8) of the other end metal sheet, referred to as second end metal sheet (8), is pierced (80),
- each of the three flat metal sheets (6, 7, 8) is pierced, at the periphery of the central part thereof, with six ports (61, 62, 63, 64, 65, 66; 71, 72, 73, 74, 75, 76; 81, 82, 83, 84, 85, 86), the first to fourth ports (61 to 64; 71 to 74; 81 to 84) of each metal sheet being elongated over a length corresponding to a portion of the length of the central part along one of the axes X of the metal sheets and being distributed in pairs on either side of said axis X, while the fifth and sixth (65, 75, 85; 66, 76, 86) ports are elongated over a length corresponding substantially to the length of the central part along the other of the axes Y,
- the first end metal sheet (6) also comprises a seventh (67) and an eighth (68) port arranged symmetrically on either side of the axis X, inside its first to fourth ports (61, 62, 63, 64), and elongated over a length corresponding substantially to the length of the central part along the axis X,
- the second (8) of the end metal sheets also comprises a seventh (87) and an eighth (88) port arranged symmetrically on either side of the axis Y inside, respectively, its fifth (85) and its sixth (86) port, and elongated over a length corresponding substantially to the length of the central part along said axis Y, and
- the first (71), third (73), fifth (75) and sixth ports of the central metal sheet (7) are widened relative respectively to the first (61, 81), third (63, 83), fifth (65, 85) and sixth (66, 86) ports of each end metal sheet, while the second (62, 72, 82) and fourth (64, 74, 84) ports of the three metal sheets are of substantially identical dimensions to one another,
- all the widened ports (71, 73, 75, 76) of the central metal sheet (7) comprise, in their widened part, tongues of metal sheets spaced apart from one another, forming a comb, each of the slits defined between the edge of a widened slit (71, 73, 75, 76) and a tongue or between two consecutive tongues opening onto one of the inner ports of the first (6) or second (8) end metal sheet,
- the three metal sheets (6, 7, 8) are laminated and assembled together such that:

• the tongues of metal sheets form spacers between first (6) and second (8) end metal sheets, respectively, between the first (61) and seventh (67) ports of the first end metal sheet (6), between the third (63) and eighth (68) ports of the first end metal sheet (6), between the fifth (85) and seventh (87) ports of the second end metal sheet (8), and between the sixth (86) and eighth (88) ports of the second end metal sheet (8),
• each of the first to sixth ports (61 to 66) of one of the three metal sheets is individually in fluid communication respectively with one of the corresponding first to sixth ports (71 to 76; 81 to 86) of the two other metal sheets,
• the first (61) or alternatively the second (62) port of the first (6) end metal sheet is in fluid communication with the seventh (66) port of the first (6) end metal sheet via the slits the first (71) widened port of the central metal sheet (7),
• the third (63) or alternatively the fourth (64) port of the first (6) end metal sheet is in fluid communication with the eighth (68) port of the first (6) end metal sheet via the slits of the third (73) widened port of the central metal sheet (7),
• the fifth (85) and the seventh (87) ports of the second (8) end metal sheet are in fluid communication via the slits of the fifth (75) widened port of the central metal sheet (7),
• the sixth (86) and the eighth (88) ports of the second (8) end metal sheet are in fluid communication via the slits of the sixth (76) widened port of the central metal sheet (7).

5. The high-temperature electrolysis (HTE) reactor or high-temperature fuel cell (SOFC) as claimed in claim 4, at least one of the two interconnectors of the thermal regulation stages being constituted from the three metal sheets as the interconnectors of the electrochemical stages, but do not comprise the seventh (87) and the eighth (88) port of the second end metal sheet (8).

6. The high-temperature electrolysis (HTE) reactor or high-temperature fuel cell (SOFC) as claimed in claim 4 or 5, the two interconnectors of a same electrochemical stage (5.1, 5.2) each being constituted from three identical flat metal sheets (6, 7, 8), but with the central metal sheet of one of the interconnectors turned upside down relative to the central metal sheet of the other of the interconnectors.

7. The high-temperature electrolysis (HTE) reactor or high-temperature fuel cell (SOFC) as claimed in one of the preceding claims, comprising a number of thermal regulation stages which is different from the number of electrochemical stages.

8. The high-temperature electrolysis (HTE) reactor or high-temperature fuel cell (SOFC) as claimed in one of the preceding claims, comprising a number of thermal regulation stages which is higher at the center of the stack than at the ends of the stack.

9. The high-temperature electrolysis (HTE) reactor or high-temperature fuel cell (SOFC) as claimed in one of the preceding claims, in which no thermal regulation stage is visible from the outside of the stack.

10. A method for the high-temperature electrolysis of steam $H_2O$, or the coelectrolysis of steam $H_2O$ and of carbon dioxide $CO_2$, implemented in a reactor as claimed in one of claims 1 and 3 to 9, according to which:

   - the steam ($EH_2(1)$) or a mixture of steam $H_2O$ and of carbon dioxide $CO_2$ are supplied from the interconnectors (5.1, 5.2) of the electrochemical stages as fuel, and it is distributed to the cathodes of the cells, then the hydrogen $H_2$ produced ($SH_2(1)$) or the synthesis gas (mixture of carbon monoxide CO and of hydrogen $H_2$) is recovered at the outlet of the cathodes,
   - a draining gas, such as air, ($E(O_2)$), is supplied from the interconnectors (5.1, 5.2) of the electrochemical stages and it is distributed to the anodes of the cells, then the oxygen $O_2$ produced and the draining gas ($S(O_2)$) is recovered at the outlet of the anodes,
   - a heat-exchange gas ($EH_2(2)$) is supplied from the interconnectors (5.2, 5.3) of the thermal regulation stages and it is distributed to the electrical contact elements (14), then it is recovered at the outlet of the elements (14),

   according to which the heat-exchange gas ($EH_2(2)$) is preferably the fuel (steam $H_2O$, or mixture of steam $H_2O$ and of hydrogen $H_2$, or mixture of steam $H_2O$ and of carbon dioxide $CO_2$) or the draining gas, such as air ($E(O_2)$).

11. A method for producing electricity at high temperature, implemented in a solid oxide fuel cell (SOFC) as claimed in one of claims 2 to 9, according to which:

   - the fuel ($EH_2(1)$) is supplied from the interconnectors (5.1, 5.2) of the electrochemical stages and it is distributed to the anodes of the cells, then the surplus fuel and the water produced ($SH_2(1)$) are recovered at the outlet of the anodes,
   - the oxidizer, such as air, ($E(O_2)$), is supplied from the interconnectors (5.1, 5.2) of the electrochemical stages and it is distributed to the cathodes of the cells, then the surplus oxidizer ($S(O_2)$) is recovered at the outlet of the cathodes,
   - a heat-exchange gas ($EH_2(2)$) is supplied from the interconnectors (5.2, 5.3) of the thermal regulation stages and it is distributed to the electrical contact elements (14), then it is recovered at the outlet of the elements (14),

   the fuel being preferably hydrogen or methane ($CH_4$).

12. The method for the high-temperature electrolysis of steam $H_2O$, or the coelectrolysis of steam $H_2O$ and of carbon dioxide $CO_2$ as claimed in claim 10, and the method for producing electricity at high temperature as claimed in claim 12, according to which the supply of the fuel gas is connected in series to that of the heat-exchange gas.

13. The method for the high-temperature electrolysis of steam $H_2O$, or the coelectrolysis of steam $H_2O$ and of carbon dioxide $CO_2$ as claimed in one of claims 10 and 12, and the method for producing electricity at high temperature as claimed in one of claims 11 and 12, according to which the supply of the fuel gas is in coflow to that of the heat-exchange gas.

14. The method for the high-temperature electrolysis of steam $H_2O$, or the coelectrolysis of steam $H_2O$ and of carbon dioxide $CO_2$ as claimed in one of claims 10 and 12, and the method for producing electricity at high temperature as claimed in one of claims 11 and 12, according to which the supply of the fuel gas is in counterflow to that of the heat-exchange gas.

15. The method for the high-temperature electrolysis of steam $H_2O$, or the coelectrolysis of steam $H_2O$ and of carbon dioxide $CO_2$ as claimed in one of claims 10 and 12 to 14, and the method for producing electricity at high temperature as claimed in one of claims 11 and 12 to 14, according to which an exothermic or endothermic chemical reaction is carried out between the heat-exchange gas and the electrical contact elements (14).

## Fig.1

2H$_2$
(+ H$_2$O)

2H$_2$O
(+ H$_2$)

2O$^{2-}$

O$_2$
(+ gaz drainant)

(gaz drainant)

4e$^-$

4e$^-$

−    +

1

## Fig.2

Amenée courant

H$_2$ + H$_2$O

5

50

H$_2$O

C2

51

5

50

H$_2$O

C1

Motif élémentaire

2.2

3.2

4.2

O$_2$

2.1

# Fig.3

Chaleur à évacuer

5

50

Motif élémentaire

Air

C2

51

5

50

Air

C1

Chaleur à évacuer

H₂O

2.2

3.2

4.2

H₂

2.1

Courant produit

# Fig.4

e⁻

5.3

E(H₂(2))

Etages thermiques

Etages electrochimiques

E(H₂(1))
E(O₂)

E(H₂(1))
E(O₂)

E(H₂(1))
E(O₂)

E(H₂(1))
E(O₂)

E(H₂(2))

C₂

C₁

C₂

2.1
3.1
4.1

C₁

14

5.3

e⁻

# Fig.5

Fig.6A

Fig.6B

Fig.6C

Fig.7A

Fig.7B

66;76;86

69;79;89

63;73;83

62;72;82

S(O2)

70

61;71;81

64;74;84

E(O2)

**Fig.7C**

65;75;85

63;73;83

66;76;86

X

64;74;84

70

69;79;89

**Fig.7D**

Y

65;75;85

61;71;81

62;72;82

8

84

83

86

S(02)

85

89

80

80

80

7

76

76

71

70

X

73

75

Y

63

66

64

74

60

62

6

68

**Fig.8**

5.3

E(02)

67

61

## Fig.9A

## Fig.9B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009040335 A
- WO 2005122302 A
- US 20060105213 A
- WO 2013060869 A
- US 4574112 A
- US 2005064270 A
- WO 2011083691 A
- US 4336122 A
- WO 2014097101 A
- EP 2980904 A